# EUROPÄISCHE PATENTSCHRIFT

(11) **EP 2 989 269 B1**
(45) Veröffentlichungstag und Bekanntmachung des Hinweises auf die Patenterteilung: **07.10.2020**
(21) Anmeldenummer: 14719324.7
(22) Anmeldetag: 24.04.2014
(51) Int. Cl.: E04F 15/02, B29C 70/76

(54) **VERLEGEPLATTE INSBESONDERE FÜR FUSSBÖDEN**
FLOOR BOARD, IN PARTICULAR FOR FLOORING
DALLE DE PLANCHER, EN PARTICULIER POUR PLANCHERS

(30) Priorität: 24.04.2013 DE 102013007048
(43) Veröffentlichungstag der Anmeldung: 02.03.2016
(73) Patentinhaber: MXF Holding GmbH, 15831 Groß Klenitz (DE)
(72) Erfinder: HÜLLENKREMER, Felix, 59065 Hamm (DE); MANNHEIM, Manuel, 37308 Westhausen (DE)
(74) Vertreter: Patentanwälte Dörner & Kötter PartG mbB
(86) Internationale Anmeldenummer: PCT/EP2014/058411
(87) Internationale Veröffentlichungsnummer: WO 2014/174056

(56) Entgegenhaltungen:
- EP-A1- 1 584 770
- WO-A1-2012/126046
- WO-A2-2005/040521
- WO-A2-2008/004960
- DE-U1-202007 018 935
- US-A1- 2010 031 594

## Beschreibung

Die vorliegende Erfindung betrifft Verlegeplatten, insbesondere Fußbodenplatten, die an jeweils gegenüberliegenden Seiten zueinander korrespondierende Verbindungsgeometrien zum Verbinden mit benachbarten Platten aufweisen sowie Verlegeplatten die eine hohe Dichtigkeit im Bereich der Fugen aufweisen. Insbesondere betrifft die vorliegende Erfindung derartige Verlegeplatten mit denen sich auch in nasser oder feuchter Umgebung Fußböden aus auf Holz basierten Material und Holzwerkstoffen ausbilden lassen.

Fußböden sollten nicht nur robust und pflegeleicht sein, sondern auch dekorativen Ansprüchen gerecht werden. Naturmaterialien wie zum Beispiel Holz sind der ideale Werkstoff, der diesem Anforderungsprofil gerecht werden kann. Sie vereinen ein hohes Maß an Funktionalität mit dem Wohlbehagen eines lebendigen Werkstoffs.

Aufgrund seiner biogenen organischen Struktur sind dem Einsatzspektrum von Holz jedoch natürliche Grenzen gesetzt. Als offenporiges Material mit hohen Kapillarkräften ist Holz ausgesprochen hygroskopisch und adsorbiert Wasser, was nicht nur zur Verformung führen kann, sondern auch einen mikrobiellen und enzymatischen Abbau fördert. Die Anwendung von Holzfußböden in Feucht- und Nassbereichen ist daher äußerst problematisch und mit einem enormen Risiko behaftet, das technische Anforderungsprofil nur unzureichend zu erfüllen. Trotz ihrer Ästhetik stellen Holzfußböden in Feuchträumen bisher daher ein teureres Nischenprodukt mit hohem Pflegeaufwand dar.

Auf Holz basierte Verlegeplatten mit am Rand entlanglaufenden Verbindungsprofilen zum Verbinden von Platten sind an sich bekannt, werden jedoch aus den vorstehend genannten Gründen in der Regel nicht in feuchter oder nasser Umgebung eingesetzt. Zwar ist es auch bekannt, die Oberflächen durch entsprechende Behandlung wasserabweisend zu machen, ein Problem bildet jedoch die Fugenabdichtung an den Stoßkanten benachbarter Platten. Hier kann Wasser eintreten, das dann in das Innere der Platte eindringt und das Holzmaterial aufquellen lässt.

DE 20 2007 018 935 U1 beschreibt eine Verlegeplatte für die Ausbildung eines Fußbodens, wobei die Verbindung nach dem Nut- und Federprinzip erfolgt. Die Platte weist an einer Seitenfläche einen oberen absatzartigen Vorsprung und auf der gegenüberliegenden Seitenfläche eine unteren absatzartigen Vorsprung auf. In dem unteren absatzartigen Vorsprung befindet sich einen nach oben offene Vertiefung sowie eine horizontal oder schräg nach oben geführte Aussparung, die in das Platteninnere ragt. Entsprechend hierzu befindet sich auf der Unterseite des oberen absatzartigen Vorsprungs eine nach unten ragende Kontur, die beim Zusammenfügen in der Vertiefung einer anzulegenden Platte zu liegen kommt. Weiter weist das Verbindungsprofil ein über den seitlichen Plattenrand hinausragenden Vorsprung auf, der beim Zusammenfügen in die Aussparung der benachbarten Platte geschoben wird. Es wird vorgeschlagen, die Verbindungsprofile aus Vertiefung und Aussparung einerseits und nach unten ragender Kontur und über den seitlichen Plattenrand hinausragenden Vorsprung andererseits oder zumindest Teile davon aus einem Kunststoffmaterial mittels Spritzguss oder Co-Extrusion an der Grundplatte anzubringen. Eine spezielle Abdichtung der Stoßkanten ist nicht vorgesehen. Zudem sind die Konturen der Verbindungsprofile in einigen Bereichen nicht zueinander komplementär und/oder passgenau geformt, sodass dort im zusammengefügten Zustand Lücken sind und die Verbindungsprofile nicht formschlüssig aneinander anliegen. Mit diesen Verbindungsprofilen mit horizontal ausgerichteten Verbindungselementen ist das Anlegen einer Platte an eine erste Platte nur mittels einer Schwenkbewegung von schräg oben nach unten möglich. Sind dann die Platten an einer Seite, üblicherweise der Längsseite, bereits miteinander verbunden, ist das Aneinanderfügen an den kurzen Seiten erschwert, da die Schrägbewegung nicht mehr ohne weiteres ausführbar ist. Die Platten können aus einem holzbasierten Material und auch aus Massivholz gefertigt sein. Ein Hinweis auf einen Einsatz in einem Nassbereich oder auf eine Eignung hierfür findet sich nicht.

Verlegeplatten mit im Wesentlichen vertikal ausgerichteten Verbindungselementen sind in DE 100 01 076 C1 beschrieben. Diese Verlegeplatten haben Randprofile, bei denen Hinterschneidungen ineinandergreifen. Ein Federelement ragt unterhalb eines oberen Absatzes senkrecht nach unten und hat einen im Wesentlichen kreisförmigen Querschnitt. Als Gegenstück dazu ist ein Nutelement auf der Oberseite eines unteren Absatzes vorgesehen. Es hat gleichfalls einen kreisförmigen Querschnitt und ist nach oben offen. Sowohl Nutelement als auch Federelement haben zueinander korrespondierende gekrümmte Hinterschneidungen. Die Verzahnung von Nut und Feder beim Verlegen wird als eine Absenkbewegung beschrieben, allerdings wird ausgeführt, dass die Bewegung der abgesenkten Platte genaugenommen eine Schwenkbewegung ist. Die Absätze mit Nut- beziehungsweise Federelement sind aus der Grundplatte herausgeformt und bestehen aus demselben Material wie die Grundplatte. Es findet sich kein Hinweis auf die Eignung für nasse oder feuchte Umgebung.

Weitere Verlegeplatten sind in der US2010/031594 A1, DE 20 2007 018935 U1, WO 2008/004960 A2, EP 1 584 770 A1, WO 2012/126064 A1 sowie WO 2005/040521 A2 beschrieben.

Es war ein Anliegen der vorliegenden Erfindung eine holzbasierte Verlegeplatte bereitzustellen, die insbesondere auch für nasse oder feuchte Umgebung geeignet ist, die eine hohe Dichtigkeit im Bereich der Fugen aufweist, und/oder ein einfaches und sicheres Verlegen erlaubt, und die auf wirtschaftliche Art und Weise einfach herzustellen ist. Die erfindungsgemäße Verlegeplatte weist die Merkmale des Anspruchs 1 auf. Vorteilhafte Weiterbildungen sind in den abhängigen Ansprüchen definiert. Die Erfindung betrifft zudem ein Verfahren zur Herstellung einer solchen Verlegeplatte gemäß Anspruch 12, sowie die Verwendung einer solchen Verlegeplatte gemäß Anspruch 13.

Die erfindungsgemäße Verlegeplatte ist aus einer eckigen Grundplatte gebildet, die eine Oberseite, Unterseite und mindestens vier Seitenflächen hat. Die Grundplatte ist aus einem holzbasierten Material hergestellt.

Gemäß einem ersten Aspekt der Erfindung weist die Verlegeplatte eine Oberseite, eine Unterseite und mindestens vier Seitenflächen auf, wobei jeweils zwei gegenüberliegende Seitenflächen zueinander korrespondierende Verbindungsgeometrien aus Kunststoff aufweisen, und wobei die Verlegeplatte aus einer Grundplatte besteht, und die erste Verbindungsgeometrie entlang zwei aneinanderstoßenden Seitenflächen angeordnet ist und eine nach unten geöffnete Nut aufweist, die von einem Wulst nach außen begrenzt wird, und die Nut entlang ihrer Wandung eine Hinterschneidung aufweist, und die zweite Verbindungsgeometrie entlang der aneinanderstoßenden Seitenflächen angeordnet ist, und eine nach oben offene Nut aufweist, die nach außen durch einen Wulst begrenzt ist, und die Nut entlang ihrer Wandung eine Hinterschneidung aufweist, wobei Form und Abmessung der ersten Verbindungsgeometrie komplementär zur Form und Abmessung der zweiten Verbindungsgeometrie sind, wobei der Wulst der ersten Verbindungsgeometrie und der Wulst der zweiten Verbindungsgeometrie jeweils zumindest abschnittsweise wenigstens einen Einschnitt aufweisen.

Die jeweils an zwei gegenüberliegenden Seitenflächen angeordneten und zueinander korrespondierenden Verbindungsgeometrien sind zum Aneinanderfügen und Verbinden mit benachbarten Verlegeplatten ausgebildet. Weiterhin sind die zueinander korrespondierenden Verbindungsgeometrien derart ausgebildet, so dass diese beim Verbinden von zwei erfindungsgemäßen Verlegeplatten die erste Verbindungsgeometrie der ersten Verlegeplatte mit der zweiten Verbindungsgeometrie der zweiten Verlegeplatte ineinander einschnappen.

Die Einschnitte in den Wülsten der ersten und zweiten Verbindungsgeometrie ermöglichen ein leichteres Fügen in ihre jeweilige korrespondierende Verbindungsgeometrie. Beim Durchgang durch die schmalste Stelle der jeweils korrespondierenden Verbindungsgeometrie reduziert sich durch den Einschnitt der Durchmesser der Wulst. Der Wulst ist komprimiert. An der tiefsten Stelle entlastet sich der Wulst wieder und schnappt in seine korrespondierende Geometrie ein.

In einer Ausführungsform weist der Wulst der ersten Verbindungsgeometrie und der Wulst der zweiten Verbindungsgeometrie jeweils eine Abfolge von Einschnitten auf, die mittels eines Steges voneinander abgetrennt sind, wobei insbesondere der Steg eine Dicke, gemessen entlang der Längserstreckungsrichtung des Wulstes, von 2 mm bis 50 mm, aufweist.

Dabei wird die Anzahl der Stege (und somit die "Länge" des Einschnittes) und die Dicke der Stege je nach Anforderung an die Verbindungsgeometrien (auch in Abhängigkeit vom Material der Verbindungsgeometrien) ausgewählt. Beispielsweise bewirkt eine hohe Anzahl an Stegen mit einer hohen Dicke eine erhöhte Steifigkeit der Verbindungsgeometrien. Bevorzugt sind die Stege äquidistant angeordnet und auch die Dicken der Stege sind gleich. Alternativ können die Stege auch unterschiedliche Dicken aufweisen und/oder in unterschiedlichen Abständen angeordnet sein.

Eine mittlere Aussteifung der Verbindungsgeometrie wird erreicht, wenn das Verhältnis von Stegen zu Einschnitten gleich ist. Durch Verringerung der Anzahl der Stege und Erhöhung der Anzahl der Einschnitte wird das Fügen der Verlegeplatte erleichtert die Steifigkeit hingegen nimmt ab. Der Form- und Kraftschluss wird reduziert. Das Fügen der Elemente hingegen erleichtert sich. Umgekehrt bedeute dies: Durch Erhöhung der Anzahl der Stege und Verringerung der Anzahl der Einschnitte, wird der Form- und Kraftschluss erhöht und das Fügen erschwert. Die Dicke und Anzahl der Stege ist folglich materialabhängig. Härtere Kunststoffe benötigen weniger bzw. dünnere Stege, weichere Kunststoffe folgerichtig mehr bzw. dickere Stege.

Erfindungsgemäß weist die Verlegeplatte an zwei aneinanderstoßenden Seitenflächen der Grundplatte an der Oberseite einen vorspringenden Absatz auf, wobei die zwei gegenüberliegenden Seitenflächen planar sind, und wobei eine erste Verbindungsgeometrie an der Unterseite der Absätze angeordnet ist, und die zweite Verbindungsgeometrie entlang des unteren Randes der planaren Seitenflächen angeordnet ist.

Somit weist die erfindungsgemäße Verlegeplatte eine Oberseite, eine Unterseite und mindestens vier Seitenflächen auf, wobei jeweils zwei gegenüberliegende Seitenflächen zueinander korrespondierende Verbindungsgeometrien aus Kunststoff aufweisen, wobei die Verlegeplatte aus einer Grundplatte besteht, und zwei aneinanderstoßende Seitenflächen der Grundplatte an der Oberseite einen vorspringenden ersten Absatz aufweisen, und wobei die zwei gegenüberliegenden Seitenflächen planar sind, und wobei eine erste Verbindungsgeometrie an der Unterseite der ersten Absätze angeordnet ist, und die zweite Verbindungsgeometrie entlang des unteren Randes der planaren Seitenflächen angeordnet ist, und wobei entlang der Seitenflächen eine Dichtlippe mit den Verbindungsgeometrien aus Kunststoff angebracht ist, und die erste Verbindungsgeometrie eine nach unten geöffnete Nut aufweist, die von einem Wulst nach außen begrenzt wird, und die Nut entlang ihrer Wandung eine Hinterschneidung aufweist, und die zweite Verbindungsgeometrie eine nach oben offene Nut aufweist, die nach außen durch einen Wulst begrenzt ist, und die Nut entlang ihrer Wandung eine Hinterschneidung aufweist, wobei Form und Abmessung der ersten Verbindungsgeometrie komplementär zur Form und Abmessung der zweiten Verbindungsgeometrie sind, wobei der Wulst der ersten Verbindungsgeometrie und der Wulst der zweiten Verbindungsgeometrie jeweils zumindest abschnittsweise wenigstens einen Einschnitt aufweisen.

Es ragt somit an zwei aneinanderstoßenden Seitenflächen der obere Bereich der Grundplatte über den unteren Bereich hinaus und bildet einen ersten vorspringenden Absatz, der entlang der beiden Seitenflächen verläuft. Die Seitenflächen, die den Seitenflächen mit vorspringendem Absatz gegenüberliegen, sind planar, weisen somit keinen vorspringenden Absatz auf. Dabei befindet sich die erste Verbindungsgeometrie auf der Unterseite der vorspringenden Absätze und die zweite Verbindungsgeometrie erstreckt sich entlang, insbesondere entlang des unteren Randbereichs, der planaren beiden anderen Seitenflächen.

Dabei erstreckt sich die Dichtlippe entlang der Seitenflächen, die durch die ersten Absätze der Grundplatte ausgebildet werden und entlang des oberen Randbereichs, der planaren beiden anderen Seitenflächen. Die Verbindungsgeometrien erstrecken sich unterhalb der jeweiligen Absätze entlang der Grundplatte und entlang des unteren Randbereichs, der planaren beiden anderen Seitenflächen und sind an der Dichtlippe angeordnet und mit dieser verbunden. Dabei sind die Abmessungen der Verbindungsgeometrien und der ersten Absätze so gewählt, dass bei einem Verbinden zweier Verlegeplatten die Dichtlippen der jeweiligen Verlegeplatten gegenüberliegen ohne dass sich zwischen diesen Seitenflächen des oberen Bereichs wesentliche Hohlräume ausbilden. Insbesondere lassen sich die Verlegeplatten lückenlos aneinanderlegen.

In einer Ausführungsform hat der vorspringende erste Absatz, der an zwei aneinanderstoßenden Seitenflächen der Grundplatte vorgesehen ist, typischerweise eine Stärke, die 30 - 40 %, vorzugsweise 33 bis 37 % und insbesondere bevorzugt 35 - 36 % der Höhe der Grundplatte beziehungsweise Verlegeplatte entspricht.

Die Länge des ersten Absatzes, das heißt der Abstand zwischen Stirnfläche des ersten Absatzes und der Seitenfläche, ist vorzugsweise im Wesentlichen gleich zu dem Abstand zwischen Unterseite des Absatzes und unterem Rand der Seitenfläche, insbesondere beträgt die Länge des ersten Absatzes 8 mm bis 15 mm, bevorzugt 11 mm bis 12 mm.

In einer Ausführungsform hat der vorspringende zweite Absatz, der an zwei aneinanderstoßenden Seitenflächen der Grundplatte vorgesehen ist, typischerweise eine Stärke, die 30 - 40 %, vorzugsweise 33 bis 37 % und insbesondere bevorzugt 35 - 36 % der Höhe der Grundplatte beziehungsweise Verlegeplatte entspricht.

Die Länge des zweiten Absatzes, das heißt der Abstand zwischen Stirnfläche des zweiten Absatzes und der Seitenfläche, ist vorzugsweise im Wesentlichen gleich zu dem Abstand zwischen Unterseite des Absatzes und unterem Rand der Seitenfläche, insbesondere beträgt die Länge des ersten Absatzes 1 mm bis 5 mm, bevorzugt 2 mm bis 3 mm.

Durch den Absatz wird es ermöglicht die dort angebrachte Verbindungsgeometrie so zu positionieren, dass das Verbindungselement auf dieser Seite genau über der korrespondierenden Verbindungsgeometrie der anderen Seite liegt. Des Weiteren wird dadurch das rein vertikale Fügen der Verlegeplatten erst ermöglicht.

Die erste und zweite Verbindungsgeometrie sind komplementär zueinander ausgebildet, wobei die erste und zweite Verbindungsgeometrie jeweils aus einer nach unten geöffneten Nut und einem Wulst gebildet ist, der die Nut nach außen hin begrenzt, und wobei die Innenwände der Nut eine Hinterschneidung aufweisen. Dabei kann das freie Ende des Wulstes im Wesentlichen jegliche Formen die aufgrund ihrer Geometrie einen Hinterschnitt zulassen aufweisen.

In einer Ausführungsform weisen die Innenwände der Nut der ersten und/oder zweiten Verbindungsgeometrie eine gekrümmte Hinterschneidung auf, wobei das freie Ende des jeweiligen Wulstes eine rundliche Form hat.

In einer Ausführungsform ist der Wulst der ersten Verbindungsgeometrie passgenau zur Innenkontur der nach oben offenen Nut der zweiten Verbindungs-geometrie und der Wulst der zweiten Verbindungsgeometrie passgenau zur Innenkontur der nach unten offenen Nut der ersten Verbindungsgeometrie geformt.

In einer Ausführungsform weist die nach unten offene Nut der ersten Verbindungsgeometrie einen kreisbogenförmigen Querschnitt auf, und der Wulst der ersten Verbindungsgeometrie weist ein gerundetes freies Ende auf, das an der Außenwandung mit einer Innenkrümmung in eine ebene Fläche mündet und in die Dichtlippe übergeht.

Die Dimensionen und Konturen der Nute und Wulste sind in den obigen Ausführungsformen derart gewählt, dass beim Aneinanderfügen von zwei erfindungsgemäßen Verlegeplatten der Wulst der ersten Verbindungsgeometrie einer erfindungsgemäßen Verlegeplatte in die Nut der zweiten Verbindungsgeometrie der anderen erfindungsgemäßen Verlegeplatte (und umgekehrt) vertikal von oben hineingedrückt werden können und einschnappen. Die Innenkonturen der Nut einer Verbindungsgeometrie und die Außenkontur des Wulstes der anderen Verbindungsgeometrie entsprechen einander in der Form wie eine Positiv- und Negativabbildung.

In einer Ausführungsform sind die Dimensionen passgenau, sodass eine form- und kraftschlüssige Verbindung ausgebildet wird, wobei die Konturen aneinanderliegen und im Wesentlichen zwischen Nut und Wulst im zusammengefügten Zustand keine Hohlräume ausgebildet werden.

In einer Ausführungsform sind an den Eckbereichen der Verlegeplatte, an denen zwei Seitenflächen zusammenstoßen, vorzugsweise zumindest an einer Seitenfläche Unterbrechungen in der Verbindungsgeometrie, insbesondere des Wulstes, vorgesehen, sodass es beim Verbinden der Verlegeplatten zu keiner Überlappung zwischen den Verbindungsgeometrien von aneinanderstoßenden Seitenflächen, wie Schmal- und Längsseiten, kommt. Dafür springen die Unterbrechungen in Richtung der einen Seite, zum Beispiel einer Schmalseite, mindestens soweit zurück, wie der Radius der Wulst der anstoßenden Seite, zum Beispiel Längsseite, hervorragt, sodass beim Verbinden keine Überlappung entsteht. Diese Unterbrechungen können Abschnitte ohne Verbindungsgeometrie, insbesondere ohne Wulst sein, und erleichtern daher ein Aneinanderfügen von benachbarten oder angrenzenden Verlegeplatten an diese Seitenflächen. Mit Hilfe der Unterbrechungen können Verlegeplatten sowohl längs wie auch seitlich an eine erste Verlegeplatte angefügt werden. Es ergeben sich somit verschiedene Verlegemuster. Weiter ermöglichen die Unterbrechungen zumindest in eine Richtung ein beliebig versetztes Aneinanderlegen von Verlegeplatten. Die Verlegung der Verlegeplatten ist an kein definiertes Raster gebunden.

In den obigen Ausführungsformen sind die Verbindungsgeometrien und (falls vorhanden) die Dichtlippe aus Kunststoff angefertigt. Sie können vorteilhafterweise in einem Zyklus mittels Spritzgusstechnik an der vorgefertigten Grundplatte angebracht werden. Durch den Einsatz der Spritzgusstechnik ist eine kontinuierliche Produktion in Serienfertigung möglich und die Platten kommen verlegefertig zur Auslieferung. Im Ergebnis wird eine Fugenabdichtung mit integrierter Verbindungsgeometrie erhalten.

Die Dichtlippe und die Verbindungsgeometrien können aus demselben Kunststoffmaterial gebildet sein. Alternativ können die Dichtlippe und/oder die Verbindungsgeometrien aus einem Mehrkomponentenmaterial (verschiedene Kunststoffe) ausgebildet sein.

In einer Ausführungsform sind die Dichtlippe und die Verbindungsgeometrien aus einem Kunststoffmaterial einstückig ausgebildet.

In einer Ausführungsform sind die Dichtlippe und die Verbindungsgeometrien aus einem Kunststoffmaterial einstückig ausgebildet, welches eine Shore-Härte A von mindestens 60, insbesondere eine Shore-Härte A von 60 bis 90 , bevorzugt von 75 bis 85, aufweist.

In einer Ausführungsform sind die Dichtlippe und die Verbindungsgeometrien aus einem Kunststoffmaterial einstückig ausgebildet, welches eine Shore-Härte A von 80 bis 90 aufweist.

Dabei ist das Material derart ausgewählt, dass der weiche Kunststoff ausreichend elastoplastisch ist, so dass das Material bei einem entstehenden Druck abdichtet. Weiterhin sollte das Material eine ausreichende Härte aufweisen, um eine stabile Verbindung der Verlegplatten zu gewährleisten.

In einer Ausführungsform sind die Dichtlippe und die Verbindungsgeometrien aus einem Thermoplasten einstückig ausgebildet.

In einer Ausführungsform sind die Dichtlippe und die Verbindungsgeometrien aus einem thermoplastischen Elastomer einstückig ausgebildet.

Durch die einstückige Ausbildung der Dichtlippe und der Verbindungsgeometrien wird eine erhöhte Produktivität bei niedrigeren Investitionskosten ermöglicht, da dies verfahrenstechnisch leichter umzusetzen ist.

In einer Ausführungsform ist die Dichtlippe aus einem weichen Kunststoff und die Verbindungsgeometrien sind aus einem harten Kunststoff ausgebildet.

In einer Ausführungsform ist die Dichtlippe aus einem thermoplastischen Elastomer, insbesondere mit einer Shore-Härte A von 30 bis 85, und die Verbindungsgeometrien sind aus einem Thermoplasten ausgebildet.

In einer Ausführungsform ist die Dichtlippe aus einem weichen thermoplastischen Elastomer, insbesondere mit einer Shore-Härte A von 30 bis 60, und die Verbindungsgeometrien sind aus einem harten thermoplastischen Elastomer, insbesondere mit einer Shore-Härte A von mehr als 85 bis eine Shore-Härte D von 75, ausgebildet.

In einer Ausführungsform ist die Dichtlippe aus einem weichen thermoplastischen Elastomer, insbesondere mit einer Shore-Härte A von 60 bis 85, bevorzugt mit einer Shore-Härte A von 60 bis 80, und die Verbindungsgeometrien sind aus einem harten thermoplastischen Elastomer, insbesondere mit einer Shore-Härte A von mehr als 85 bis eine Shore-Härte D von 75, ausgebildet.

In einer Ausführungsform weist die Verlegeplatte, insbesondere für Fußböden, eine Oberseite, eine Unterseite und mindestens vier Seitenflächen auf, wobei jeweils zwei gegenüberliegende Seitenflächen zueinander korrespondierende Verbindungsgeometrien aufweisen zum Aneinanderfügen und Verbinden mit benachbarten Verlegeplatten, wobei die Verlegeplatte aus einer Grundplatte besteht, wobei zwei aneinanderstoßende Seitenflächen der Grundplatte an der Oberseite einen vorspringenden Absatz aufweisen und die zwei gegenüberliegenden Seitenflächen planar sind, wobei entlang der Seitenflächen eine Dichtlippe mit Verbindungsgeometrien aus Kunststoff angebracht ist, wobei eine erste Verbindungsgeometrie an der Unterseite der Absätze angeordnet ist und entlang der Seitenflächen eine nach unten geöffnete Nut aufweist, die von einem Wulst nach außen begrenzt wird, und die Nut entlang ihrer Wandung eine Hinterschneidung aufweist, wobei die zweite Verbindungsgeometrie entlang des unteren Randes der planaren Seitenflächen angeordnet ist, und eine nach oben offene Nut aufweist, die nach außen durch einen Wulst begrenzt ist, und die Nut entlang ihrer Wandung eine Hinterschneidung aufweist, wobei Form und Abmessung der ersten Verbindungsgeometrie komplementär zur Form und Abmessung der zweiten Verbindungsgeometrie sind, und beim Verbinden von zwei Verlegeplatten die erste Verbindungs-geometrie der ersten Verlegeplatte mit der zweiten Verbindungsgeometrie der zweiten Verlegeplatte ineinandereinschnappen.

Die erfindungsgemäße Verlegeplatte ist aus einer eckigen Grundplatte gebildet, die eine Oberseite, Unterseite und mindestens vier Seitenflächen hat. Die Grundplatte ist aus einem holzbasierten Material hergestellt. Entlang der Seitenflächen der Grundplatte ist eine umlaufende Dichtlippe aus Kunststoff vorgesehen. Zudem sind an jeweils zwei aneinanderstoßenden Seitenflächen an den Dichtlippen und mit diesen und der Grundplatte verbunden eine erste beziehungs-weise zweite Verbindungsgeometrie ausgebildet, die ein Aneinanderfügen von Verlegeplatten nach dem Schlüsselschloss-Prinzip mit Schnappverbindung erlauben. Die erste und zweite Verbindungsgeometrie sind ebenfalls aus einem Kunststoff gebildet.

Mit den erfindungsgemäßen Verbindungsgeometrien ist das Aneinanderfügen von einzelnen Platten durch eine vertikale Abwärtsbewegung möglich, eine Verschwenkung ist nicht erforderlich. Damit können an allen Seiten einer Platte ein gleichermaßen einfaches und unkompliziertes Aneinanderfügen sowie Fixierung einer benachbart zu verlegenden Verlegeplatte durchgeführt werden.

Dabei ragt an zwei aneinanderstoßenden Seitenflächen der obere Bereich der Grundplatte über den unteren Bereich hinaus und bildet einen vorspringenden Absatz, der entlang der beiden Seitenflächen verläuft. Die Seitenflächen, die den Seitenflächen mit vorspringendem Absatz gegenüberliegen, sind planar, das heißt weisen keinen vorspringenden Absatz auf. Die erste Verbindungsgeometrie befindet sich auf der Unterseite der vorspringenden Absätze und die zweite Verbindungsgeometrie erstreckt sich entlang des unteren Randbereichs der planaren beiden anderen Seitenflächen.

Die erste Verbindungsgeometrie ist aus einer nach unten geöffneten Nut und einem Wulst gebildet, der die Nut nach außen hin begrenzt, wobei die Innenwände der Nut eine gekrümmte Hinterschneidung aufweisen, und das freie Ende des Wulstes eine rundliche Form hat, wobei die Außenfläche des Wulstes in die Dichtlippe übergeht. Die zweite Verbindungsgeometrie ist aus einer nach oben geöffneten Nut gebildet, die auf den Innenwänden gleichfalls eine Hinterschneidung aufweist und nach außen durch einen Wulst begrenzt ist, dessen freies Ende rundlich geformt ist. Die Dimensionen und Konturen der Nute und Wulste sind derart gewählt, dass beim Aneinanderfügen von zwei Platten der Wulst der ersten Verbindungs-geometrie einer Platte in die Nut der zweiten Verbindungsgeometrie der anderen Platte und umgekehrt vertikal von oben hineingedrückt werden können und einschnappen.

In einer Ausführungsform ist der Wulst der ersten Verbindungsgeometrie passgenau zur Innenkontur der nach oben offenen Nut der zweiten Verbindungsgeometrie und der Wulst der zweiten Verbindungsgeometrie ist passgenau zur Innenkontur der nach unten offenen Nut der ersten Verbindungsgeometrie geformt. In einer Ausführungsform weist die nach unten offene Nut der ersten Verbindungsgeometrie einen kreisbogenförmigen Querschnitt auf, und der Wulst der ersten Verbindungsgeometrie hat ein gerundetes freies Ende, das an der Außenwandung mit einer Innenkrümmung in eine ebene Fläche mündet und in die Dichtlippe übergeht.

Die Innenkonturen der Nut einer Verbindungsgeometrie und die Außenkontur des Wulstes der anderen Verbindungsgeometrie entsprechen einander in der Form wie Positiv- und Negativabbildung. Vorzugsweise sind die Dimensionen passgenau, sodass eine form- und kraftschlüssige Verbindung ausgebildet wird, wobei die Konturen aneinanderliegen und im Wesentlichen zwischen Nut und Wulst im zusammengefügten Zustand keine Hohlräume ausgebildet werden. Durch das erfindungsgemäße Verbindungskonzept sind aneinandergefügte Verlegeplatten einerseits fest miteinander verriegelt, so dass ein unbeabsichtigtes Lösen verhindert ist. Andererseits lassen sie sich bei Bedarf durch entsprechende Krafteinwirkung zerstörungsfrei voneinander trennen.

Der vorspringende Absatz, der an zwei aneinanderstoßenden Seitenflächen der Grundplatte vorgesehen ist, hat typischerweise eine Stärke, die 30 - 40 %, vorzugsweise 33 bis 37 % und insbesondere bevorzugt 35 - 36 % der Höhe der Grundplatte beziehungsweise Verlegeplatte entspricht. Die Länge des Absatzes, das heißt der Abstand zwischen Stirnfläche des Absatzes und der Seitenfläche, ist vorzugsweise im Wesentlichen gleich zu dem Abstand zwischen Unterseite des Absatzes und unterem Rand der Seitenfläche.

An den Eckbereichen der Verlegeplatte, an denen zwei Seitenflächen zusammenstoßen, sind vorzugsweise zumindest an einer Seitenfläche Unterbrechungen in der Verbindungsgeometrie, insbesondere des Wulstes, vorgesehen, sodass es beim Verbinden der Verlegeplatten zu keiner Überlappung zwischen den Verbindungsgeometrien von aneinanderstoßenden Seitenflächen, wie Schmal- und Längsseiten, kommt. Dafür springen die Unterbrechungen in Richtung der einen Seite, zum Beispiel einer Schmalseite, mindestens soweit zurück, wie der Radius der Wulst der anstoßenden Seite, zum Beispiel Längsseite, hervorragt, sodass beim Verbinden keine Überlappung entsteht. Diese Unterbrechungen können Abschnitte ohne Verbindungsgeometrie, insbesondere ohne Wulst sein, und erleichtern daher ein Aneinanderfügen von benachbarten oder angrenzenden Verlegeplatten an diese Seitenflächen. Mit Hilfe der Unterbrechungen können Verlegeplatten sowohl längs wie auch seitlich an eine erste Verlegeplatte angefügt werden. Weiter ermöglichen die Unterbrechungen zumindest in eine Richtung ein versetztes Aneinanderlegen von Verlegeplatten.

Die Dichtlippe und die Verbindungsgeometrien sind aus Kunststoff angefertigt. Sie können vorteilhafterweise in einem Zyklus mittels Spritzgusstechnik an der vorgefertigten Grundplatte angebracht werden. Durch den Einsatz der Spritzgusstechnik ist eine kontinuierliche Produktion in Serienfertigung möglich und die Platten kommen verlegefertig zur Auslieferung. Im Ergebnis wird eine Fugenabdichtung mit integrierter Verbindungsgeometrie erhalten. Die Dichtlippe und die Verbindungsgeometrien können aus demselben Kunststoffmaterial gebildet sein. Beispielsweise können Thermoplasten oder thermoplastische Elastomere verwendet werden. Geeignete Beispiele für Thermoplasten sind Polyolefine wie zum Beispiel Polypropylen oder Polyethylen. Diese sind weitverbreitet und gut erhältlich. Es können jedoch auch andere thermoplastische Kunststoffe eingesetzt werden. Thermoplastische Elastomere sind an sich bekannt. Sie können Blockcopolymere sein, die aus harten und weichen Blöcken aufgebaut sind. Dabei sind die harten Blöcke aus Thermoplasten und die weichen Blöcke aus Elastomeren wie Kautschuk gebildet. Der thermoplastische harte Anteil kann kristallin oder amorph vorliegen. Es können an sich bekannte thermoplastische Elastomere eingesetzt werden, die konventioneller Weise abhängig von der Polymerart des Thermoplasten als thermoplastische Elastomere auf Amid-, Ester-, Olefin-, Styrol- oder Urethanbasis unterschieden werden.

Gemäß einer bevorzugten Ausführungsform ist die Dichtlippe aus einem elastischeren, das heißt weicheren Material gebildet, als die Verbindungsgeometrien. Vorteilhafterweise können daher für die Dichtlippe thermoplastische Elastomere und für die Verbindungsgeometrien Thermoplaste verwendet werden. Besonders vorteilhaft sind Materialpaarungen, bei denen die harten Anteile des thermoplastischen Elastomers für die Dichtlippe aus demselben thermo-plastischen Material gebildet sind, wie es für die Verbindungsgeometrien eingesetzt wird. Sind beispielsweise die Verbindungsgeometrien aus Polypropylen gebildet, kann die Dichtlippe aus einem Blockcopolymer hergestellt sein, dessen harte Anteile Polypropylen sind.
Den Kunststoffmaterialien können übliche Zusätze wie zum Beispiel Haftvermittler, Farbmittel etc. zugesetzt werden.

In einer Ausführungsform sind die Dichtlippe und die Verbindungsgeometrien aus unterschiedlichen Kunststoffmaterialien gebildet. In einer Ausführungsform ist die Dichtlippe aus einem Kunststoff gebildet ist, der elastischer ist als das Kunststoffmaterial für die Verbindungsgeometrien. In einer Ausführungsform sind die Dichtlippe aus einem thermoplastischen Elastomer und die Verbindungsgeometrien aus einem thermoplastischen Kunststoff gebildet. In einer Ausführungsform weist das Kunststoffmaterial für die Verbindungsgeometrien und das Kunststoffmaterial für die Dichtlippe einen unterschiedlichen Schmelzpunkt auf.

Beispielsweise können insbesondere dem Kunststoffmaterial für die Dichtlippe Haftvermittler zugesetzt werden, die die Anhaftung der Dichtlippe an das holzbasierte Material der Grundplatte verbessert. Haftvermittler können sinnvoll sein, wenn zum Beispiel das Kunststoffmaterial der Dichtlippe und/oder der Verbindungsgeometrien unpolaren Charakter hat, da holzbasierte Materialien im Regelfall polaren Charakter aufweisen. Hierfür kann jeder geeignete Haftvermittler eingesetzt werden, wie er bei der Herstellung von Holz-Kunststoff-Verbunden zur Verbesserung der Haftung von Kunststoffen an Holzmaterialien bekannt ist. Als Beispiel seien genannt VC-VA-Maleinsäureanhydrid-Copolymerisate (VC: Vinylchlorid; VA: Vinylacetat), Maleinsäureanhydrid (MAH) gepfropfte Polyolefine wie MAH-gepfropftes Polypropylen oder Polyethylen, Polymeres Diphenylmethandiisocyanat (PMDI) oder in Wasser emulgiertes PMDI (EMDI). Der Gehalt an Haftvermittler im Kunststoffmaterial kann je nach Bedarf gewählt werden, und beträgt üblicherweise 2-5 Gew.%. Mit Farbmitteln (Pigmente, Farbstoffe) können bei Bedarf und Wunsch insbesondere die im verbundenen Zustand der Verlegeplatten sichtbaren Dichtlippen eingefärbt werden. Die Hydrophobierung der Oberseiten der Verlegeplatten kann auf an sich bekannte Art und Weise, zum Beispiel durch Imprägnierung oder Oberflächen-versiegelung mit UV-Öl, duroplast-basierten Lacken oder einem synthetischen Wachs, zum Beispiel auf Basis von Polypropylen oder Polyethylen, durchgeführt werden.

Die erfindungsgemäße Verlegplatte weist in einer Ausführungsform eine Grundplatte mit einer Oberseite, einer Unterseite und mindestens vier Seitenflächen auf, wobei entlang der Seitenflächen ein Verbindungselement angeordnet ist, welches die Dichtlippe und einen Verbindungsabschnitt mit den Verbindungsgeometrien aufweist, wobei das Verbindungselement aus einem Mehrkomponentenmaterial ausgebildet ist, welches wenigstens zwei Kunststoffe umfasst, wobei wenigstens ein erster Kunststoff ein weicher Kunststoff ist und wenigstens ein zweiter Kunststoff ein harter Kunststoff ist.

Dabei sind die Verbindungsgeometrien derart ausgebildet, dass sie ein Aneinanderfügen von Verlegeplatten, insbesondere nach dem Schlüsselschloss-Prinzip, erlauben. Weiterhin ist der Verbindungsabschnitt an der Dichtlippe und den Seitenflächen angeordnet und mit diesen verbunden. Dabei sind die Verbindungsgeometrien derart ausgebildet, dass sie ein Aneinanderfügen von Verlegeplatten, insbesondere nach dem Schlüsselschloss-Prinzip, erlauben.

Die am häufigsten auftretende Verbindung zwischen Verlegeplatten ist das Nut- und Federsystem. Diese Bodenbeläge müssen dabei zusätzlich fest mit dem Untergrund verbunden werden (Kleben/Schrauben). Viele Hersteller von Fertigparketten und Laminatfußböden haben sogenannte Klick-/Clickverbindungen etabliert. Diese Fußböden können schwimmend verlegt werden, da über die Verbindung auch ein Kraftschluss realisiert wird. Allen Verbindungstypen gemein, im Gegensatz zu uns, ist die horizontale Fügerichtung. Die Klickverbindungen sind meist patentiert. Alle gängigen Verbindungstypen sind holzbasiert bzw. materialbasiert, d.h. sie werden aus der Verlegeplatte ausgefräst/ausgeformt.

In einer Ausführungsform ist die Dichtlippe an dem oberen Teilabschnitt der Seitenfläche (also dem Teilabschnitt an der Oberfläche der Grundplatte) und der Verbindungsabschnitt ist an dem unteren Teilabschnitt der Seitenfläche (also dem Teilabschnitt an der Grundfläche der Grundplatte) angeordnet.

In einer Ausführungsform weist der Verbindungsabschnitt eine erste Verbindungsgeometrie und eine zweite Verbindungsgeometrie auf, wobei der Verbindungsabschnitt mit der ersten Verbindungsgeometrie an zwei aneinanderstoßenden Seitenflächen der Grundplatte angeordnet ist, und wobei der Verbindungsabschnitt mit der zweiten Verbindungsgeometrie an den zwei weiteren Seitenflächen der Grundplatte angeordnet ist, und die zweite Verbindungsgeometrie eine zur ersten Verbindungsgeometrie korrespondierende Form umfasst.

In einer Ausführungsform ist die Dichtlippe des Verbindungselements aus einem ersten, weichen Kunststoff ausgebildet, wobei der Verbindungsabschnitt und die Verbindungsgeometrien des Verbindungselements aus wenigstens einem zweiten, harten Kunststoff ausgebildet sind.

In einer Ausführungsform ist die Dichtlippe des Verbindungselements aus einem ersten, weichen Kunststoff ausgebildet, wobei der Verbindungsabschnitt und die Verbindungsgeometrien des Verbindungselements aus wenigstens einem zweiten, harten Kunststoff und wenigstens einem weiteren, weichen Kunststoff ausgebildet sind. Alternativ sind weitere, unterschiedliche Kunststoffmaterialen und Komponenten (z.B. ein weiterer harter Kunststoff) möglich.

In einer Ausführungsform ist die Dichtlippe des Verbindungselements aus einem ersten, weichen Kunststoff ausgebildet, wobei der Verbindungsabschnitt ein Stützgerüst aus einem zweiten, harten Kunststoff aufweist, und wobei das Stützgerüst von wenigstens einem weiteren, weichen Kunststoff abschnittsweise an der Außenfläche des Stützgerüsts umgeben und mit diesem verbunden ist. Somit wird der Verbindungsabschnitt mit den Verbindungsgeometrien des Verbindungselements durch wenigstens einen harten Kunststoff und wenigstens einen weichen, an der Außenfläche des Stützgerüsts angeordneten, Kunststoff ausgebildet.

In einer Ausführungsform ist die Dichtlippe des Verbindungselements aus einem ersten, weichen Kunststoff ausgebildet, wobei der Verbindungsabschnitt ein Stützgerüst aus einem zweiten, harten Kunststoff aufweist, und wobei das Stützgerüst von wenigstens einem weiteren, weichen Kunststoff vollständig an der Außenfläche des Stützgerüsts umgeben und mit diesem verbunden ist.

Bevorzugt weist der Verbindungsabschnitt ein Stützgerüst aus einem zweiten, harten Kunststoff im "Inneren" des Verbindungsabschnitts und der Verbindungsgeometrien auf, wobei das Stützgerüst (zumindest abschnittsweise) bevorzugt von wenigstens einem weicheren, weiteren Kunststoffmaterial umgeben ist, so dass die Außenfläche des Verbindungsabschnitts wenigstens abschnittsweise von einem weichen Kunststoffmaterial umgeben ist.

Durch den Einsatz eines harten Kunststoffs in Form eines Stützgerüstes kann die Formstabilität und Passgenauigkeit der weichen Komponente deutlich verbessert werden. Die harte Komponente unterstützt die Formstabilität, so dass der Kraft- und Formschluss zwischen den korrespondierenden Verbindungsgeometrien erhöht wird. Die Verbindung wird steifer, so dass Lasten gleichmäßig auf den gesamten Fußbodenverbund verteilt werden. Die weiche Komponente erfüllt die Funktion der Abdichtung und sorgt zudem durch seine Elastizität für ein leichteres Fügen, da sich das Material stauchen lässt. Zudem ermöglicht die weiche Komponente eine (Tritt-)Schallabsorption in der Verbindung

Des Weiteren ist gewährleistet, dass die zum Einsatz kommende (organische) Verlegeplatte durch Änderungen im Raumklima noch quellen und schwinden kann. Die dabei entstehenden Spannungen werden von der weichen Komponente aufgenommen und ausgeglichen. Durch den Einsatz mehrerer Kunststofftypen mit unterschiedlichen Eigenschaften entsteht ein Verbundwerkstoff mit der Summe der einzelnen Eigenschaften.

In einer Ausführungsform ist die Dichtlippe des Verbindungselements aus einem ersten, weichen Kunststoff ausgebildet, wobei der Verbindungsabschnitt ein Stützgerüst aus einem zweiten, harten Kunststoff aufweist, und wobei das Stützgerüst von wenigstens einem weiteren, weichen Kunststoff derart abschnittsweise an der Außenfläche des Stützgerüsts umgeben und mit diesem verbunden ist, so dass die Verbindungsgeometrien (insbesondere eine erste und eine zweite Verbindungsgeometrie) ausgebildet werden. Der Verbindungsabschnitt weist somit Verbindungsgeometrien auf, die zumindest abschnittsweise in ihren Außenflächen aus einem weichen Kunststoff ausgebildet sind.

In einer Ausführungsform ist die Dichtlippe und ein Teilbereich des Verbindungsabschnitts einstückig aus demselben, weichen Kunststoff ausgebildet.

In einer Ausführungsform sind die Abschnitte des Verbindungsabschnitts und der Verbindungsgeometrien, die aus einem weichen Kunststoffmaterial ausgebildet sind, derart an der Außenfläche des Stützgerüsts angeordnet, dass bei einem Verbinden zweier Verlegeplatten die Verbindungsgeometrien so ineinandergreifen, dass die Abschnitte, die durch den weichen Kunststoff ausgebildet werden, sich im verbundenen Zustand kontaktieren. Beispielsweise sind eine erste Verbindungsgeometrie und eine zweite Verbindungsgeometrie derart abschnittsweise durch einen weichen Kunststoff ausgebildet (wobei dies ein Stützgerüst aus einem harten Kunststoff im "Inneren" aufweisen), dass bei einem Verbinden der ersten mit der zweiten Verbindungsgeometrie die beiden Verbindungsgeometrien derart ineinander greifen, dass die Abschnitte aus dem weichen Kunststoff sich kontaktieren. Somit sind im verbundenen Zustand die Außenflächen des Stützgerüsts und somit die Außenflächen des Seitenflächen durch die Verbindungsgeometrien und die Dichtlippe vollständig von dem ersten, weichen Kunststoff der Dichtlippe und den weiteren weichen Kunststoff des Verbindungsabschnitts umgeben.

Dabei können der erste und der weitere weiche Kunststoff (zur abschnittsweisen Umfassung des Stützgerüsts) aus demselben Material bestehen. Alternativ kann die abschnittsweise Umfassung des Stützgerüsts mittels weiterer Kunststoffe erfolgen, so dass ein Abschnitt durch einen weichen Kunststoff und ein weiterer Abschnitt durch einen anderen, weichen Kunststoff umfasst wird. Bevorzugt erfolgt die abschnittsweise Umfassung durch denselben Kunststoff. Das Stützgerüst kann einstückig aus einem harten Kunststoffmaterial ausgebildet sein. Alternativ kann das Stützgerüst aus verschiedenen Komponenten (welche denselben oder unterschiedliche harte Kunststoffmaterialen aufweisen) ausgebildet sein. Bevorzugt ist das Stützgerüst einstückig aus einem harten Kunststoff ausgebildet.

In einer bevorzugten Ausbildungsform weist die Dichtlippe und die abschnittsweise Umfassung des Stützgerüsts denselben Kunststoff auf, wobei insbesondere die Dichtlippe und eine Teilbereich des Verbindungsabschnitts einstückig ausgebildet sind.

Insbesondere ist die Dichtlippe an dem oberen Teilabschnitt der Seitenfläche (also dem Teilabschnitt an der Oberfläche der Grundplatte) und der Verbindungsabschnitt an dem unteren Teilabschnitt der Seitenfläche (also dem Teilabschnitt an der Grundfläche der Grundplatte) angeordnet.

In einer Ausführungsform weist die Verlegeplatte an zwei aneinanderstoßende Seitenflächen der Grundplatte an der Oberseite einen vorspringenden Absatz auf, wobei die zwei gegenüberliegenden Seitenflächen planar sind, und wobei der Verbindungsabschnitt mit einer ersten Verbindungsgeometrie an der Unterseite der Absätze angeordnet ist, und der Verbindungsabschnitt mit einer zweiten Verbindungsgeometrie entlang des unteren Randes der planaren Seitenflächen angeordnet ist.

In einer Ausführungsform weist die Verlegeplatte an zwei aneinanderstoßende Seitenflächen der Grundplatte an der Oberseite einen vorspringenden Absatz auf, wobei die zwei gegenüberliegenden Seitenflächen planar sind, und wobei der Verbindungsabschnitt mit einer ersten Verbindungsgeometrie an der Unterseite der Absätze angeordnet ist, und der Verbindungsabschnitt mit einer zweiten Verbindungsgeometrie entlang des unteren Randes der planaren Seitenflächen angeordnet ist. Dabei ist entlang der Seitenflächen die Dichtlippe aus dem weichen Kunststoff angebracht. Der Verbindungsabschnitt weist ein Stützgerüst aus dem harten Kunststoff auf, wobei das Stützgerüst derart abschnittsweise an seiner Außenfläche von einem weiteren, weichen Kunststoff umgeben ist, so dass die ersten Verbindungsgeometrie und die zweite Verbindungsgeometrie ausgebildet werden.

In einer Ausführungsform weist der weiche Kunststoff eine Shore-Härte A von 10 bis 95, und der harte Kunststoff eine Shore-Härte D von 10 bis 95 auf.

In einer Ausführungsform weist der weiche Kunststoff eine Shore-Härte A von 30 bis 85, und der harte Kunststoff eine Shore-Härte D von 40 bis 80 auf.

In einer Ausführungsform weist der weiche Kunststoff eine Shore-Härte A von 60 bis 80, und der harte Kunststoff eine Shore-Härte D von 60 bis 80 auf.

In einer Ausführungsform ist der weiche Kunststoff ein thermoplastisches Elastomer und der harte Kunststoff ein Thermoplast.

In einer Ausführungsform ist der weiche Kunststoff ein weiches thermoplastisches Elastomer und der harte Kunststoff ein hartes thermoplastisches Elastomer.

In einer Ausführungsform ist der weiche Kunststoff ein thermoplastisches Elastomer mit einer Shore-Härte A von 10 bis 80, und der harte Kunststoff ist ein thermoplastisches Elastomer mit einer Shore-Härte A von 80 bis eine Shore-Härte D 80.

In einer Ausführungsform ist der weiche Kunststoff ein thermoplastisches Elastomer mit einer Shore-Härte A von 30 bis 80, und der harte Kunststoff ist ein thermoplastisches Elastomer mit einer Shore-Härte von D 30 bis D 80.

In einer Ausführungsform ist der weiche Kunststoff ein thermoplastisches Elastomer mit einer Shore-Härte A von 60 bis 80, und der harte Kunststoff ist ein thermoplastisches Elastomer eine Shore-Härte von D 50 bis D 70.

Besonders vorteilhaft sind Materialpaarungen, bei denen die harten Anteile des thermoplastischen Elastomers aus demselben thermoplastischen Material gebildet sind, wie es für die Teile des Verbindungselements (harte Kunststoffe) eingesetzt wird. Wird beispielsweise Polypropylen als harter Kunststoff eingesetzt, können die weichen Kunststoffe (Dichtlippe und Abschnitte des Verbindungsabschnitts) aus einem Blockcopolymer hergestellt sein, dessen harte Anteile Polypropylen sind.

In einer Ausführungsform sind der Wulst der ersten Verbindungsgeometrie und der Wulst der zweiten Verbindungsgeometrie aus einem weichen Kunststoff ausgebildet, wobei die Nut der erste Verbindungsgeometrie und die Nut der zweiten Verbindungsgeometrie aus einem harten Kunststoff ausgebildet sind.

In einer Ausführungsform wird der Verbindungsabschnitt mit den Verbindungsgeometrien durch ein Stützgerüst aus einem harten Kunststoff ausgebildet, wobei das Stützgerüst die Nut der ersten Verbindungsgeometrie und die Nut der zweiten Verbindungsgeometrie aufweist und ausbildet, und wobei der Wulst der ersten Verbindungsgeometrie und der Wulst der zweiten Verbindungsgeometrie einen Teilbereich des Stützgerüsts als Kern aufweist und die endgültige Form des Wulsts aus einer Umfassung des Kernbereichs des Stützgerüsts mittels eines weichen Kunststoff ausgebildet wird.

In einer Ausführungsform wird der Verbindungsabschnitt mit den Verbindungsgeometrien durch ein Stützgerüst aus einem harten Kunststoff ausgebildet, wobei das Stützgerüst die Nut der ersten Verbindungsgeometrie und die Nut der zweiten Verbindungsgeometrie aufweist und ausbildet, und wobei die Innenwände der Nut der ersten und/oder zweiten Verbindungsgeometrie eine gekrümmte Hinterschneidung aufweisen und der Wulst der ersten Verbindungsgeometrie und der Wulst der zweiten Verbindungsgeometrie einen Teilbereich des Stützgerüsts als Kern aufweist und die endgültige Form des Wulsts aus einer Umfassung des Kernbereichs des Stützgerüsts mittels eines weichen Kunststoffs ausgebildet wird. Insbesondere sind an der Innenwand der Nut der ersten und/oder zweiten Verbindungsgeometrie - unterhalb bzw. oberhalb (je nach Art der Verbindungsgeometrie) der Hinterschneidung - Dichtstreifen aus einem weichen Kunstsoff angeordnet.

In einer Ausführungsform sind die Dichtlippe und die Außenfläche des Wulstes der ersten Verbindungsgeometrie einstückig aus einem weichen Kunststoff geformt.

In einer Ausführungsform sind die Dichtlippe und der Dichtstreifen der zweiten Verbindungsgeometrie einstückig aus einem weichen Kunststoff geformt.

Erfindungsgemäß weist der Wulst der ersten Verbindungsgeometrie und der Wulst der zweiten Verbindungsgeometrie jeweils zumindest abschnittsweise wenigstens einen Einschnitt auf. Dabei kann der Einschnitt ausschließlich in dem weichen Kunststoff des Wulstes angebracht sein. Bevorzugt erstreckt sich der Einschnitt sowohl auf den weichen Kunststoff des Wulstes also auch auf den Kernbereich des Wulstes der durch das Stützgerüst aus einem harten Kunststoff ausgebildet wird.

In einer Ausführungsform weist der Wulst der ersten Verbindungsgeometrie und der Wulst der zweiten Verbindungsgeometrie jeweils eine Abfolge von Einschnitten auf, die mittels eines Steges voneinander abgetrennt sind, wobei insbesondere der Steg eine Dicke, gemessen entlang der Längserstreckungsrichtung des Wulstes, von 2 mm bis 50 mm, aufweist.

In einer Ausführungsform weist das Stützgerüst Aussteifungselemente (wie beispielsweise Nasen und Steg auf), die in entsprechende Öffnungen in den Teilbereich des Verbindungselements, das aus einem weichen Kunststoff ausgebildet ist, eingebracht werden können und somit eine Aussteifung des Verbindungselements erzielt wird. Die Anzahl und die Abmessungen der Aussteifungselemente können an die gewünschte Steifigkeit (in Abhängigkeit des verwendeten Materials) angepasst werden. Je mehr Aussteifungselemente und je länger (und breiter) diese Elemente sind, desto mehr wird die Steifigkeit erhöht.

In einer Ausführungsform weisen die Ecken des Verbindungselements korrespondierende Stabilisierungselemente auf, wie beispielsweise Verrundungen und korrespondierende Hohlkehlen, um die Stabilität der verlegten Platten zu erhöhen.

Hinsichtlich weiterer Vorteile und besonderer Ausgestaltungen der Verbindungsgeometrien wird auch auf die detaillierte Beschreibung der Erfindung verwiesen.

Geeignete Beispiele für Thermoplasten sind Polyolefine wie zum Beispiel Polypropylen oder Polyethylen. Diese sind weitverbreitet und gut erhältlich. Es können jedoch auch andere thermoplastische Kunststoffe eingesetzt werden.

Grundsätzlich können alle eingesetzten Kunststoffe, insbesondere die Hartkomponente, gefüllt und/oder verstärkt sein. Möglich sind hierbei alle aus dem Stand der Technik bekannten gängigen Materialien, wie beispielsweise Talkum, Glasfaser, Kohlefaser, pflanzliche Fasern, etc.

Unter einem thermoplastischen Elastomer im Sinne der Erfindung sind nach DIN EN ISO 18064 polymere Werkstoffe, die sich im Gebrauchstemperaturbereich entropieelastisch (gummielastisch) verhalten, zu verstehen. Der Zugverformungsrest ist bei einem thermoplastischen Elastomer kleiner als 50%. Die thermoplastischen Elastomer haben oberhalb ihres Gebrauchstemperaturbereichs einen Schmelzbereich (Fließbereich). Der Kälterichtwert TR bzw. die Glasübergangstemperatur Tg liegen in der Regel unter 0°C.

Die thermoplastischen Elastomer im Sinne der Erfindung können auf Polymerblends (intensives Mischen von Thermoplasten und Elastomeren, wie EPM, EPDM, NR etc.) oder Blockcopolymeren (Kombination von harten und weichen Phasen (zwei-oder mehrphasig) in einem Polymer)) basieren. Grundsätzlich werden harte, schmelzbare mit weichen, elastischen Phasen kombiniert. Blockcopolymere sind Polymere, die aus harten und weichen Blöcken aufgebaut sind. Dabei sind die harten Blöcke aus Thermoplasten und die weichen Blöcke aus Elastomeren wie Kautschuk gebildet. Der thermoplastische harte Anteil kann kristallin oder amorph vorliegen.

Ein thermoplastisches Elastomer im Sinne der Erfindung weist insbesondere eine Shore-Härte A von 30 bis eine Shore-Härte D von ca. 75 auf. Dabei kann zwischen einem weichen thermoplastischen Elastomer mit einer Shore-Härte A von 30 bis ca. 85 und einem harten thermoplastischen Elastomer mit einer Shore-Härte A 85 bis einer Shore-Härte D von ca. 75 unterschieden werden.

Es können an sich bekannte thermoplastische Elastomere eingesetzt werden, die konventioneller Weise abhängig von der Polymerart des Thermoplasten als thermoplastische Elastomere auf Amid-, Ester-, Olefin-, Styrol- oder Urethanbasis unterschieden werden.

Insbesondere können folgende thermoplastische Elastomere (TPE) verwendet werden: TPA: Polyamid-TPE; TPA-EE: TPA, Weichsegmente mit Ether- und Ester-Bindungen; TPA-ES: TPA mit Polyester-Weichsegmenten; TPA-ET: TPA mit Polyether-Weichsegmenten TPC: Copolyester-TPE; TPC-EE: TPC, Weichsegmente mit Ether- und Ester-Bindungen; TPC-ES: TPC mit Polyester-Weichsegmenten; TPC-ET: TPC mit Polyether-Weichsegmenten; TPO: Olefin-TPE; TPO-(EPDM+PP): Ethylen/Propylen/Dien+ Polypropylen; TPO-(EVAC+PVDC): Ethylen/Vinylacetat+Polyvinylidenchlorid; TPS: Styrol-TPE; TPS-SBS: Styrol/Butadien Block-Copolymer; TPS-SIS: Styrol/Isopren-Block-Copolymer; TPS-SEBS: Styrol/Ethenbuten/Styrol-Block-Copolymer; TPS-SEPS: Styrol/Ethenpropen/Styrol-Block-Copolymer; TPU: Urethan-TPE; TPU-ARES: Aromatische Hartsegmente, Polyester-Weichsegmente; TPU-ARET: Aromatische Hartsegmente, Polyether-Weichsegmente; TPU-AREE: Aromatische Hartsegmente, Weichsegmente mit Ether- und Ester-Bindungen; TPU-ARCE: Aromatische Hartsegmente, Polycarbonat-Weichsegmente; TPU-ARCL: Aromatische Hartsegmente, Polycaprolacton-Weichsegmente; TPU-ALES: Aliphatische Hartsegmente, Polyester-Weichsegmente; TPU-ALET: Aliphatische Hartsegmente, Polyether-Weichsegmente; TPV: TPE mit vernetztem Kautschuk.

Dabei erfolgt die Einteilung der TPEs auf Basis ihres chemischen Aufbaus in 7 Hauptgruppen. Die eingesetzten Monomereinheiten wurden gemäß DIN EN ISO 18064 mit den obigen Kurzzeichen benannt.

In einer Ausführungsform wird das weiche Kunststoffmaterial aus einem der oben aufgezählten thermoplastischen Elastomer ausgewählt (für die Dichtlippe und ggf. Teilbereiche des Verbindungsabschnitts), wobei das harte Kunststoffmaterial (für die Verbindungsgeometrien, den Verbindungsabschnitt bzw. das Stützgerüst) aus einem Thermoplasten, wie beispielsweise Polypropylen, ausgewählt wird.

In einer Ausführungsform wird das weiche Kunststoffmaterial (für die Dichtlippe und ggf. Teilbereiche des Verbindungsabschnitts) aus einem dynamisch vulkanisierten Thermoplasten (TPV) ausgewählt, wobei das harte Kunststoffmaterial (für die Verbindungsgeometrien, den Verbindungsabschnitt bzw. das Stützgerüst) aus einem Thermoplasten, wie beispielsweise Polypropylen, ausgewählt wird.

TPV ist eine Mischung aus Polypropylen und dynamisch vulkanisiertem Kautschuk EPDM (PP/EPDM "Ethylen-Propylen-Dien-Kautschuk"), dessen Eigenschaften mit denen von Gummiteilen vergleichbar sind. Insbesondere weist TPV, im Vergleich zu anderen TPEs, höhere Hitzebeständigkeit (130 °C bis 140 °C) auf, so dass TPV vor allem in einem Bereich mit hohen Temperarturen (z.B. Sauna) bevorzugt ist. Beispielsweise kann als Material RAU-TPEV, ein modifiziertes PP mit vernetzten EPDM-Anteilen verwendet werden.

Bezüglich weiterer Eigenschaften wird auf das Sicherheitsdatenblatt AV0190 bezüglich RAU-TPEV der Firma REHAU verwiesen ("http://www.rehau.com/linkableblob/LT_lt/872506/data/Materlalmerkblatt_RAU-TPEV_AV0190-data.pdf").

In einer Ausführungsform ist das weiche Kunststoffmaterial (für die Dichtlippe und ggf. Teilbereiche des Verbindungsabschnitts) mit Weichmachern kombiniertem PVC (Polyvinylchlorid).

Besonders vorteilhaft sind Materialpaarungen, bei denen die harten Anteile des weichen Kunststoffmaterials, insbesondere ein weiches thermoplastischen Elastomer, (für die Dichtlippe und ggf. Teilbereiche des Verbindungsabschnitts) aus demselben thermoplastischen Material gebildet sind, wie es für Elemente aus harten Kunststoffmaterial (für die Verbindungsgeometrien, den Verbindungsabschnitt bzw. das Stützgerüst) eingesetzt wird. Sind beispielsweise die Verbindungsgeometrien aus Polypropylen gebildet, kann die Dichtlippe aus einem Blockcopolymer hergestellt sein, dessen harte Anteile Polypropylen sind.

Den Kunststoffmaterialien können übliche Zusätze wie zum Beispiel Haftvermittler, Farbmittel etc. zugesetzt werden.

Beispielsweise können insbesondere dem Kunststoffmaterial (sowohl für die Elemente aus weichem Kunststoff als auch für die Elemente aus hartem Kunststoff), wie z.B. die Dichtlippe und den Verbindungsabschnitt, Haftvermittler zugesetzt werden, die die Anhaftung der Dichtlippe und des Verbindungsabschnitts bzw. der Verbindungselemente an das holzbasierte Material der Grundplatte verbessert. Haftvermittler können sinnvoll sein, wenn zum Beispiel das Kunststoffmaterial der Dichtlippe und/oder der Verbindungsgeometrien bzw. des Verbindungsabschnitts unpolaren Charakter hat, da holzbasierte Materialien im Regelfall polaren Charakter aufweisen. Hierfür kann jeder geeignete Haftvermittler eingesetzt werden, wie er bei der Herstellung von Holz-Kunststoff-Verbunden zur Verbesserung der Haftung von Kunststoffen an Holzmaterialien bekannt ist. Als Beispiel seien genannt VC-VA-Maleinsäureanhydrid-Copolymerisate (VC: Vinylchlorid; VA: Vinylacetat), Maleinsäureanhydrid (MAH) gepfropfte Polyolefine wie MAH-gepfropftes Polypropylen oder Polyethylen, Polymeres Diphenylmethandiisocyanat (PMDI) oder in Wasser emulgiertes PMDI (EMDI).

Der Gehalt an Haftvermittler im Kunststoffmaterial kann je nach Bedarf gewählt werden, und beträgt üblicherweise 2-5 Gew.% .

Mit Farbmitteln (Pigmente, Farbstoffe) können bei Bedarf und Wunsch insbesondere die im verbundenen Zustand der Verlegeplatten sichtbaren Dichtlippen eingefärbt werden.

Die Hydrophobierung der Oberseiten der Verlegeplatten kann auf an sich bekannte Art und Weise, zum Beispiel durch Imprägnierung oder Oberflächenversiegelung mit UV-Öl, duroplast-basierten Lacken oder einem synthetischen Wachs, zum Beispiel auf Basis von Polypropylen oder Polyethylen, durchgeführt werden. Alternativ kann eine Oberflächenbeschichtung auch mittels eines hochelastischen PU-Schmelzlacks erfolgen.

Die erfindungsgemäße Verlegeplatte ist insbesondere rechteckig. Sie kann länglich oder quadratisch sein, wobei längliche Verlegeplatten üblicher sind. Alternativ kann die erfindungsgemäße Verlegeplatte auch mehreckig (insbesondere mit einer geraden Seitenanzahl) ausgestaltet sein.

Die Grundplatte kann aus Massivholz sein oder einen Schichtaufbau aufweisen, mit Trägerplatte, wobei auf der Trägerplatte mindestens eine weitere Schicht aufgetragen ist.

Die Grundplatte kann aus Massivholz sein oder einen Schichtaufbau aufweisen, mit Trägerplatte, wobei auf der Trägerplatte mindestens eine weitere Schicht aufgetragen ist.

Grundsätzlich eigenen sich alle Materiealien, die sich zu plattenförmigen Werkstoffen ausbilden lassen. Insgesamt ist der Einsatz von Fliesen und Steinzeug denkbar sowie Vinylböden. Insbesondere wird holzbasiertes Material verwendet

Prinzipiell kann jedes holzbasierte Material zur Herstellung verwendet werden. Es können Laub- oder Nadelhölzer sowie chemisch und/oder thermisch modifizierte Hölzer, als auch Holzwerkstoffe eingesetzt werden. Vorzugsweise werden Hölzer, massiv oder als Deckbeziehungsweise Dekorschicht eingesetzt, deren Dauerhaftigkeitsklassen nach DIN EN 350-2 mindestens in Klasse 2, vorzugsweise in Klasse 1 bis 2 eingestuft sind. Beispiele für solche besonders für Feucht- oder Nassbödenbereiche geeignete einheimische Hölzer sind demzufolge Eiche oder Robinie. Selbstverständlich können je nach Bedarf und Wunsch auch andere Hölzer verwendet werden.

Holzwerkstoffe sind Materialien, deren Substrat aus Holzbestandteilen besteht, die durch einen Zerkleinerungsprozess gewonnen und anschließend durch eine Matrix mit Bindemittel-Eigenschaften gefügt werden. Beispiele sind Faser-, Span-, OSB-Platten aber auch Sperrholz etc. Für den Schichtaufbau kann die Trägerplatte ebenfalls aus einem Massivholz, auch aus einem Massivholz minderer Qualität, oder Leimholzplatten, Span- oder Faserplatten oder anderen Holzwerkstoffen etc. hergestellt sein. Die Deckschicht oder Dekorschicht kann aus Echtholzfurnier sowie beliebigen anderen dekorativem Material gebildet sein.

Die erfindungsgemäßen Verlegeplatten eigenen sich besonderes zu einer Verwendung, für die Ausbildung von Fußböden, Wandbelegen (Fassaden) oder Deckenbelegen in feuchter oder nasser Umgebung. Sowohl für den Innen- als auch Außenbereich

Durch das erfindungsgemäße Verbindungskonzept des ersten Aspekts und zweiten Aspekts der Erfindung sind aneinandergefügte Verlegeplatten einerseits fest miteinander verriegelt, so dass ein unbeabsichtigtes Lösen verhindert ist. Andererseits lassen sie sich bei Bedarf durch entsprechende Krafteinwirkung zerstörungsfrei voneinander trennen. Es ist das Aneinanderfügen von einzelnen Platten durch eine vertikale Abwärtsbewegung möglich, eine Verschwenkung ist nicht erforderlich. Damit können an allen Seiten einer Platte ein gleichermaßen einfaches und unkompliziertes Aneinanderfügen sowie Fixierung einer benachbart zu verlegenden Verlegeplatte durchgeführt werden.

Mit den erfindungsgemäßen Verlegeplatten ist es möglich, auch im Außenbereich eine fugenlose Verbindung für Holzböden zu erhalten. Es ist nicht mehr erforderlich zwischen den Holzdielen einen Abstand als Fuge vorzusehen, um sicherzustellen, dass Wasser abfließt und das Holz sich gegebenenfalls ausdehnen kann. Diese Fugen haben verschiedene Nachteile. So sammelt sich hier Unrat wie Laub, Nadeln etc. und verrottetes Material. Außerdem können die Fugen ein nichtunerhebliches Unfallrisiko, insbesondere beim Barfußlaufen, darstellen. Durch das erfindungsgemäß mögliche Schließen der Fugen mit Hilfe der Dichtlippen lassen sich diese Nachteile unter Beibehaltung der Vorteile eines Fußbodens auf Holzbasis eliminieren.

Wasser kann entlang der Oberfläche ablaufen, wobei bei der Verlegung ein geringfügiges Gefälle, insbesondere von 1-3 %, zur Unterstützung vorgesehen werden kann.

Für die Herstellung der erfindungsgemäßen Verlegeplatte wird zunächst die Kontur der Grundplatte aus Holz oder holzbasiertem Material erzeugt. Hierzu können übliche holzverarbeitende Techniken eingesetzt werden, wie Fräsen, Spanen etc.

Anschließend werden die umlaufende Dichtlippe und die Verbindungsgeometrien entlang der Seitenflächen der Grundplatte angebracht. Dies geschieht besonders vorteilhaft mittels Spritzguss.

Hierfür kommt eine Negativform (Kavität) für das Spritzgusswerkzeug zum Einsatz, in der die Strukturen für die Dichtlippe und die Verbindungsgeometrien vorgegeben sind.
Erfindungsgemäß wird die vorgeformte Grundplatte in die Kavität eingelegt, ggf. fixiert und das Werkzeug geschlossen. Durch die eingelegte Grundplatte wird das zu füllende Volumen der Kavität festgelegt. Über eine Anspritzöffnung in dem Werkzeug wird plastifizierter Kunststoff unter hohem Druck eingespritzt. Die Plastifizierung und das Einspritzen kann mit einem Spritzaggregat erfolgen, wie einer Schneckenspritzgießmaschine oder Kolbenspritzmaschine mit Schneckenvorplastifizierung.

Die plastifizierte Kunststoffmasse wird über beheizbare Verteilerkanäle in dem Werkzeug den Strukturen für die Dichtlippe beziehungsweise den Verbindungsgeometrien zugeführt. Dabei können in einem einzigen Formvorgang, zum Beispiel nach dem Mehrkomponenten-Spritzguss-Verfahren, Strukturen aus unterschiedlichen Kunststoffen erhalten werden. Beispielsweise kann zunächst die plastifizierte Kunststoffmasse für die Ausbildung der Dichtlippen eingespritzt und den entsprechenden Strukturen zugeführt werden, und danach in einem zweiten Schritt die plastifizierte Kunststoffmasse für die Ausbildung der Verbindungsgeometrien oder umgekehrt.

Werden für die Erzeugung der Dichtlippe und der Verbindungsgeometrien unterschiedliche Kunststoffe mit unterschiedlichen Schmelzpunkten eingesetzt, ist es bevorzugt, zunächst die Kunststoffmasse mit niedrigerem Schmelzpunkt einzuspritzen und dann die Kunststoffmasse mit höherem Schmelzpunkt. Die plastifizierte Kunststoffmasse mit höherem Schmelzpunkt schmilzt an der Grenzfläche die Oberfläche der Kunststoffmasse mit niedrigerem Schmelzpunkt leicht an, wodurch eine besonders innige Verbindung der beiden Kunststoffe an der Grenzfläche erreicht wird.

Mittels des Spritzgießens lassen sich die Dichtlippe und Verbindungsgeometrien an der Grundplatte mit hoher Genauigkeit, äußerst filigraner Struktur und mit hohem Durchsatz herstellen.

Im Ergebnis werden nach dem erfindungsgemäßen Verfahren verlegefertige Platten in hohen Stückzahlen erhalten.

Erfindungsgemäß ist es damit möglich, einen Massivholzboden oder holzbasierten Fußboden im Mehrschichtaufbau für den Nassbereich bereitzustellen, der die Ästhetik und Behaglichkeit eines Holzfußbodens mit den Anforderungen für den Einsatz in einer nassen oder feuchten Umgebung auf wirtschaftliche Art und Weise kombiniert.

Nachstehend wird die vorliegende Erfindung unter Verweis auf die anliegenden Figuren anhand einer bevorzugten Ausgestaltung näher erläutert.

Es zeigen
- Figur 1: eine schräge Draufsicht von vorne auf eine erfindungsgemäße Grundplatte;
- Figur 2: die Ansicht nach Figur 1 mit Dichtlippe entlang der Seitenflächen der Grundplatte von Figur 1;
- Figur 3: die Ansicht nach Figuren 1 und 2 mit an der Dichtlippe vorgesehenen Verbindungsgeometrien mit Nut und Wulst;
- Figur 4: einen Querschnitt durch die erfindungsgemäße Verlegeplatte wie sie zum Beispiel in Figur 3 gezeigt ist;
- Figur 5: einen Querschnitt durch eine Ausgestaltung der ersten Verbindungsgeometrie;
- Figur 6: einen Querschnitt durch eine Ausgestaltung der zweiten Verbindungsgeometrie, die zu der ersten Verbindungsgeometrie gemäß Figur 5 komplementär ist;
- Figur 7: einen Querschnitt durch eine weitere Ausführungsform der erfindungsgemäßen Verlegeplatte mit Verbindungsgeometrien nach Figuren 5 und 6, und
- Figur 8: eine Ansicht von hinten links der Ausführungsform gemäß Figur 3;
- Figur 9: einen Querschnitt durch eine Verlegeplatte für Trockenparkett;
- Figur 10: einen Querschnitt durch eine Verlegeplatte mit einem Verbindungselement aus einem Mehrkomponentensystem;
- Figur 11: eine Schrägansicht des Querschnitts der Figur 10;
- Figur 12: eine Schrägansicht Stützgerüsts aus einem harten Kunststoff;
- Figur 13: einen 3D-Querschnitt des Stützgerüsts der Figur 12 aus einer ersten Perspektive;
- Figur 14: einen 3D-Querschnitt des Stützgerüsts der Figur 12 aus einer zweiten Perspektive;
- Figur 15: eine Schrägansicht der weichen Komponente D als elastisches Gerüst;
- Figur 16: einen Querschnitt der Figur 15;
- Figur 17: eine Explosionsansicht der Verlegeplatte aus einem Mehrkomponentensystem.

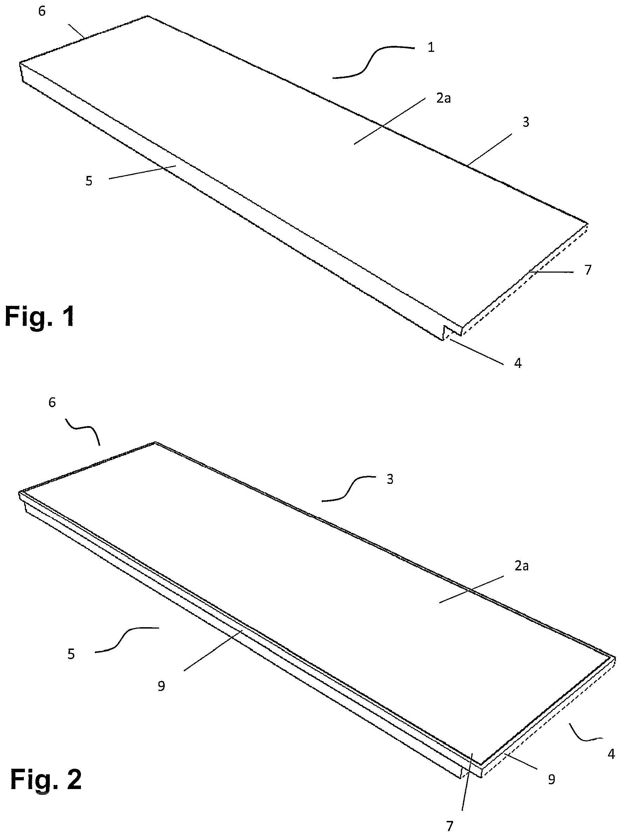

Die in Figur 1 gezeigte Grundplatte 1 hat eine rechteckige längliche Form mit einer Oberseite 2a, zwei langen Seitenflächen 3, 5 und zwei kurzen Seitenflächen 4, 6. An der in Figur 1 rechts vorne zu sehenden kurzen Seitenflächen 4 ist zu erkennen, dass der obere Randbereich der Platte 1 über den unteren Randbereich hinausragt und einen Absatz 7 bildet, der sich über die gesamte Breite der Seitenfläche 4 erstreckt. Ein entsprechender Absatz 8 (hier nicht zu erkennen) verläuft entlang der in der Figur 1 hinten befindlichen langen Seitenfläche 3. Die vordere lange Seitenfläche 5 sowie die nach hinten weisende kurze Seitenfläche 6 (hier nicht zu sehen) weisen keinen Absatz auf und sind planar. Entsprechend werden sie als planare Seitenflächen bezeichnet.

In Figur 2 ist die Grundplatte 1 von Figur 1 zu sehen, wobei bereits alle vier Seitenflächen 3, 4, 5, 6 mit einer umlaufenden Dichtlippe 9 ummantelt sind. Die Dichtlippe 9 erstreckt sich beginnend von der Oberseite 2a an den Seitenflächen 3, 4, 5, 6 nach unten bis an den unteren Rand der Absätze 7 beziehungsweise 8.

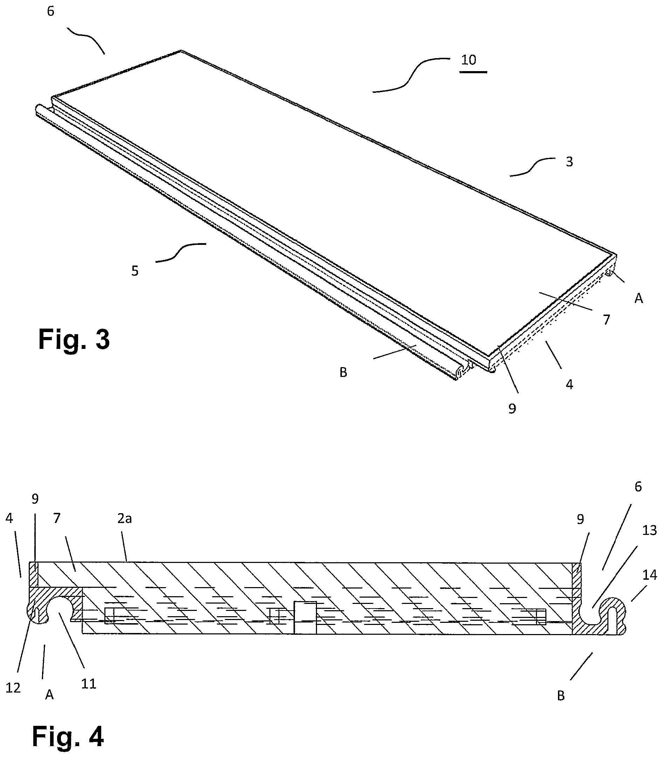

In Figur 3 ist die erfindungsgemäße Verlegeplatte 10 in ihrem fertiggestellten Zustand gezeigt, wobei die Verbindungsgeometrien A, B mit Dichtlippe 9 verbunden sind. Dabei ist an den langen und kurzen Seitenflächen 3, 4 mit Absatz die erste Verbindungsgeometrie A unterhalb der Absätze 7, 8 und an den planaren, langen und kurzen Seitenflächen 5, 6 entlang des unteren Randes die zweite Verbindungsgeometrie B angeordnet. Zu sehen sind in Figur 3 die entlang der vorderen langen Seitenfläche 5 verlaufende zweite Verbindungsgeometrie B sowie die erste Verbindungsgeometrie A entlang der in der Figur vorderen kurzen Seitenfläche 4 und deren Übergang zur ersten Verbindungsgeometrie A an der in der Figur hinteren langen Seitenfläche 3. Die Verbindungsgeometrien A, B stoßen unmittelbar an die Dichtlippe 9 an.

Einen Querschnitt durch eine Verlegeplatte 10 sowie den Verbindungsgeometrien A, B an den beiden kurzen Seitenflächen 4, 6 von Figur 3 zeigt Figur 4. Links in der Figur zu erkennen ist die Anordnung der ersten Verbindungsgeometrie A auf der Unterseite des Absatzes 7 sowie der Dichtlippe 9 auf dieser Seite, die sich auf der Stirnfläche des Absatzes 7 von der Oberseite 2a der Grundplatte 1 bis in den Wulst 12 der Verbindungsgeometrie A erstreckt. Der Wulst 12 begrenzt die nach unten offene Nut 11 nach außen. Auf der gegenüberliegenden planaren kurzen Seitenfläche 6 ist die zweite Verbindungsgeometrie B sowie die Dichtlippe 9 dieser Seite angeordnet. Die Dichtlippe 9 erstreckt sich von der Oberseite 2a entlang der Seitenfläche nach unten. Am unteren Rand der Dichtlippe 9 angeformt ist eine nach oben geöffnete Nut 13, die nach außen hin durch den Wulst 14 begrenzt ist.

Die Verbindungsgeometrien A, B sind dicht und fest an den Seitenflächen sowie die Unterseite des Absatzes 7 angeformt. Dabei gehen Dichtlippe 9 und Verbindungsgeometrien A, B ineinander über und bilden auf diese Weise eine Fugenabdichtung mit integraler Verbindungs-geometrie.

Zum Verlegen wird der Wulst 14 der zweiten Verbindungsgeometrie B einer zu verlegenden Platte vertikal von oben in die Nut 11 der ersten Verbindungsgeometrie A einer verlegten Platte hineingedrückt, wobei zugleich der Wulst 12 der ersten Verbindungsgeometrie A in der Nut 13 der zweiten Verbindungs-geometrie B eingreift. Die Nute 11, 13 und die dazugehörigen Wulste 12, 14 weisen eine zueinander komplementäre Kontur auf ähnlich wie Matritze und Patritze. Beim Hineindrücken in die Nuten 11, 13 werden die Wülste 12, 14 20 komprimiert und kehren nach Entlastung in der Nut in ihre Ursprungsform zurück, das heißt sie schnappen ein. Im Ergebnis wird eine form- und kraftschlüssige Verbindung beziehungsweise Verriegelung der Platten untereinander erhalten.

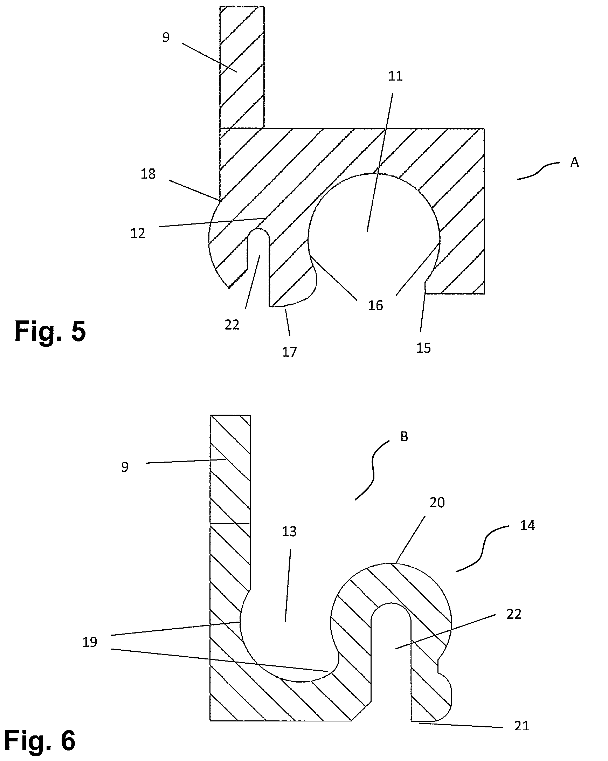

Eine bevorzugte Ausgestaltung mit Konturen von Dichtlippe 9 mit zueinander komplementären ersten und zweiten Verbindungsgeometrien A, B sind in Figuren 5 und 6 im Detail dargestellt.

In Figur 5 ist eine Dichtlippe 9 mit erster Verbindungsgeometrie A gezeigt. Die Nut 11 ist nach unten geöffnet und hat im Bereich der Öffnung 15 auf beiden Seiten eine gekrümmte Hinterschneidung 16. In der in der Figur gezeigten Ausführungsform hat die Nut 11 eine kreisbogenförmige Kontur. Die zur Grundplatte 1 ausgerichtete Wandung der Nut 11 verläuft entlang der Seitenfläche 4 (in der Figur 5 rechts). Die nach außen weisende Wandung der Nut 11 bildet den Wulst 12.

Das freie Ende 17 sowie die Außenwandung des Wulstes 12 weisen gleichfalls 5 eine kreisbogenförmige Rundung auf, wobei die kreisbogenförmige Rundung der Außenwandung mit einer Innenkrümmung 18 in einer geraden Fläche mündet und in die Dichtlippe 9 übergeht. Der Übergang von Verbindungsgeometrie A zu Dichtlippe 9 ist in Figur 5 durch einen Querstrich angedeutet.

Wie insbesondere in Figur 4 zu erkennen ist, verläuft die Dichtlippe 9 mit erster Verbindungsgeometrie A von der Oberseite 2a der Grundplatte 1 entlang der Stirnfläche der Absätze 7, 8, bis zur Unterseite der Absätze 7, 8 und schließt dort an die Verbindungsgeometrie A an. Die Dichtlippe 9 haftet fest an den Außenflächen der Grundplatte 1 an.

Wie in Figur 4 gezeigt, endet die Dichtlippe 9 mit erster Verbindungsgeometrie A in einem Abstand oberhalb des unteren Randes der Verlegeplatte. Dieser Abstand zum unteren Rand berücksichtigt die Bodenstärke der zweiten Verbindungsgeometrie B, sodass benachbarte Verlegeplatten fluchtend miteinander verbunden werden können.

Figur 6 zeigt die Dichtlippe 9 mit zweiter Verbindungsgeometrie B, die das Gegenstück zur Dichtlippe 9 mit erster Verbindungsgeometrie A gemäß Figur 5 bilden. Die zweite Verbindungsgeometrie B verläuft entlang des unteren Randes der Dichtlippe 9 an den planaren Seitenflächen 5, 6. Die zur Grundplatte 1 ausgerichtete Wandung der Nut 13 (in Figur 6 links) verläuft entlang der Seitenfläche der Grundplatte und geht nach oben in die Dichtlippe 9 über. Auf 30 der nach außen gerichteten Seite wird die Nut 13 durch den Wulst 14 begrenzt. Auf der Innenwandung der Nut 13 sind gekrümmte Hinterschneidungen 19 vorgesehen, wobei die Innenkontur der Nut 13 der Außenkontur des Wulstes 12 der ersten Verbindungsgeometrie A entspricht.

Im verbundenen Zustand sollten die Dichtlippe 9 mit Verbindungsgeometrie der ersten Platte mit der Dichtlippe 9 und komplementärer Verbindungsgeometrie der zweiten Platte zumindest auf der Oberseite miteinander fluchten und eine im Wesentlichen ebene Fläche ausbilden. Hierfür endet wie in Figur 4 erkennbar, die erste Verbindungsgeometrie A in einem Abstand oberhalb der Unterseite der Grundplatte 1. Die Höhe des Wulstes 14 (Abstand des Scheitels 20 von der Auflagefläche 21) entspricht dem Abstand des Nutgrundes der Nut 11 zur Unterseite der Grundplatte 1. Entsprechend sind die Tiefe der Nut 13 und die Eingriffstiefe des Wulstes 12 aufeinander abgestimmt.

Besonders bevorzugt ist es, wenn eine form- und kraftschlüssige Verbindung ausgebildet wird, bei der die Innenkonturen der Nute und die dazu komplementären Außenkonturen der Wulste weitestgehend aneinander liegen. "Weitestgehend" bedeutet, dass fertigungstechnisch nicht ausgeschlossen werden kann, dass in einzelnen Bereichen die Konturen der Verbindungsgeometrien nicht aneinander liegen. Erfindungsgemäß bevorzugt ist jedoch ein Formschluss mit aneinanderliegenden Konturen von Nut und darin eingreifenden Wulst.

Gemäß einer weiteren Ausführungsform können in der Wandung der Wülste 12, 14 rinnenförmige Einschnitte 22 vorgesehen sein, die sich in Längsrichtung von der Bodenseite in das Innere der Wülste 12, 14 erstrecken. Diese rinnenförmigen Einschnitte 22 erhöhen die Flexibilität der Wülste 12, 14 und erleichtern das Hineinpressen in die komplementären Nute 11, 13. Die Wülste 12, 14 lassen sich beim Hineinpressen leichter komprimieren und kehren bei Entlastung unter Ausbildung einer Schnappverbindung in ihre ursprüngliche Form zurück. Durch die Ausbildung der Schnappverbindung erfolgt gewissermaßen eine Verriegelung mit Sicherung gegen ein zufälliges Lösen der Platten einerseits. Andererseits ist es möglich, die Platten bei Bedarf unter Krafteinwirkung zerstörungsfrei wieder zu trennen.

In den rinnenförmigen Einschnitten 22 können querverlaufende Versteifungselemente wie zum Beispiel Streben, Stege, oder ähnliches vorgesehen sein. Diese dienen der Versteifung und bewirken nach Einschnappen der komplementären Verbindungsgeometrien eine Erhöhung des Kraftschlusses. Die Anzahl und der Abstand der querverlaufenden Versteifungselemente wird je nach Bedarf so gewählt, dass eine ausreichende Komprimierbarkeit der Wulste beibehalten werden kann.

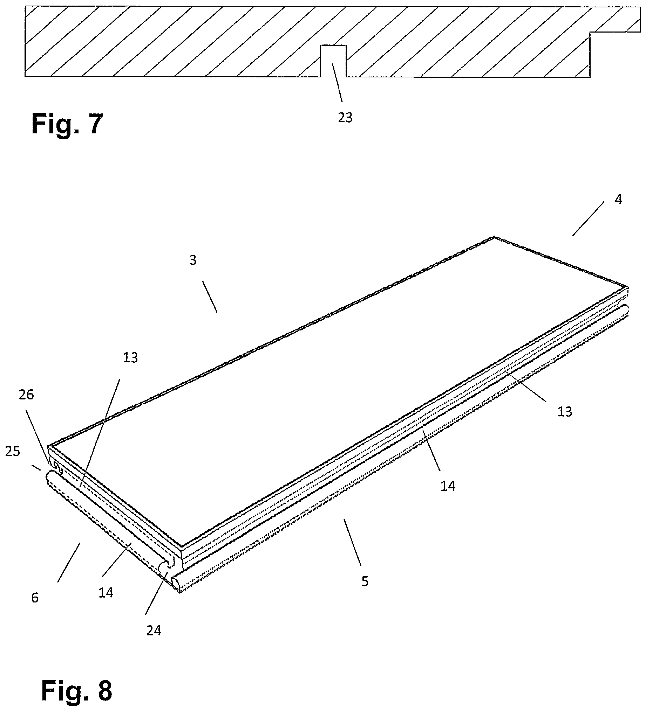

Gemäß einer weiteren Ausführungsform, wie sie zum Beispiel in Figur 7 gezeigt ist, können in der Unterseite der Grundplatte ein oder mehrere rillenförmige Einschnitte 23 vorgesehen sein, die sich vorzugsweise parallel zum Faserverlauf erstrecken.

Die rillenförmigen Einschnitte 23 können mit Kunststoffmaterial verfüllt sein. Dieses Kunststoffmaterial kann dasselbe Material sein, wie es für die Dichtlippen und/oder Verbindungsgeometrien eingesetzt wird.

Durch die rillenförmigen Einschnitte 23 wird insbesondere bei Einsatz von Massivholz das Material von inneren Spannungen entlastet, so dass Verformungen vermieden werden können. In Figur 7 hat der Einschnitt eine rechteckige Querschnittsform. Es können jedoch auch andere Querschnittsformen vorgesehen sein.

In den Eckbereichen der Verlegeplatte können Unterbrechungen der Verbindungsgeometrien vorgesehen sein, die insbesondere Abschnitte ohne Wulst sein können, zur Erleichterung des Anschlusses von aneinander zu verlegenden Platten. Beispielsweise können in den Eckbereichen, an denen Seitenflächen mit dergleichen Verbindungsgeometrie aneinanderstoßen, an einer Seitenfläche der Wulst von dem Wulstende der anderen Seitenfläche beabstandet enden, so dass ein wulstfreier Abschnitt entsteht. In den Eckbereichen, an denen Seitenflächen mit verschiedenen Verbindungs-geometrien aneinanderstoßen, zum Beispiel eine Seitenfläche mit erster Verbindungsgeometrie A und eine Seitenfläche mit zweiter Verbindungsgeometrie B, können die Verbindungsgeometrien an der Kante, an der die beiden Seitenflächen aneinanderstoßen, enden.

Details einer Ausführungsform für derartige Anschlussbereiche sind insbesondere in Figur 8 dargestellt. Figur 8 zeigt die Verlegeplatte nach Figur 3 in einer Ansicht von hinten links. Entlang der Seiten 5, 6 verläuft die zweite Verbindungsgeometrie B mit nach oben geöffneter Nut 13 und Wulst 14. In dem Eckbereich, an dem die Seitenflächen 5 und 6 aneinanderstoßen, ist ein 5 wulstfreier Abschnitt 24 vorgesehen, der dadurch erhalten wird, indem der Wulst 14 der Seite 6 nicht bis an den Wulst 14 der Seite 5 anschließt, sondern zurückspringt. Die Länge des Abschnitts 24, das heißt der Abstand zwischen den beiden Wülsten, entspricht üblicherweise mindestens dem Wulstdurchmesser. Die Länge des wulstfreien Abschnitts 24 kann jedoch je nach Bedarf variieren.

In den Eckbereichen, an denen eine Seitenfläche mit einer ersten Verbindungsgeometrie A mit einer Seitenfläche mit einer zweiten Verbindungsgeometrie B aneinanderstoßen, wie zum Beispiel in dem in Figur 8 hinten links liegenden 15 Eckbereich 25, können die Verbindungsgeometrien A, B an der Kante, an der die Seitenflächen aneinanderstoßen, enden. Dadurch wird ein freier Abschnitt 26 erhalten, sodass weitere Platten ohne Behinderung durch die Verbindungsgeometrien angelegt werden können. Bei der in Figur 8 gezeigten Ausführungsform für die Anschlussbereiche mit 20 freien Abschnitten 24, 25 handelt es sich um ein Beispiel für die Gestaltung der Anschlussbereiche. Diese können je nach Bedarf, Verwendungszweck und Verlegemuster modifiziert werden.

Mit den erfindungsgemäßen Verlegeplatten ist es möglich, auch in feuchter oder nasser Umgebung holzbasierte Böden, insbesondere auch Massivholzböden, zu verlegen. Beispielsweise können die erfindungsgemäßen Verlegeplatten in Badezimmern, Wellness- und Spa-Anlagen, Hotels, Schwimmbädern, Poolumrandungen, Kreuzfahrtschiffen etc. eingesetzt werden. Des Weiteren ist auch im Außenbereich eine fugenlose Verlegung möglich, da die Dichtlippen eine sichere Abdichtung gegen eindringendes Wasser erlauben.

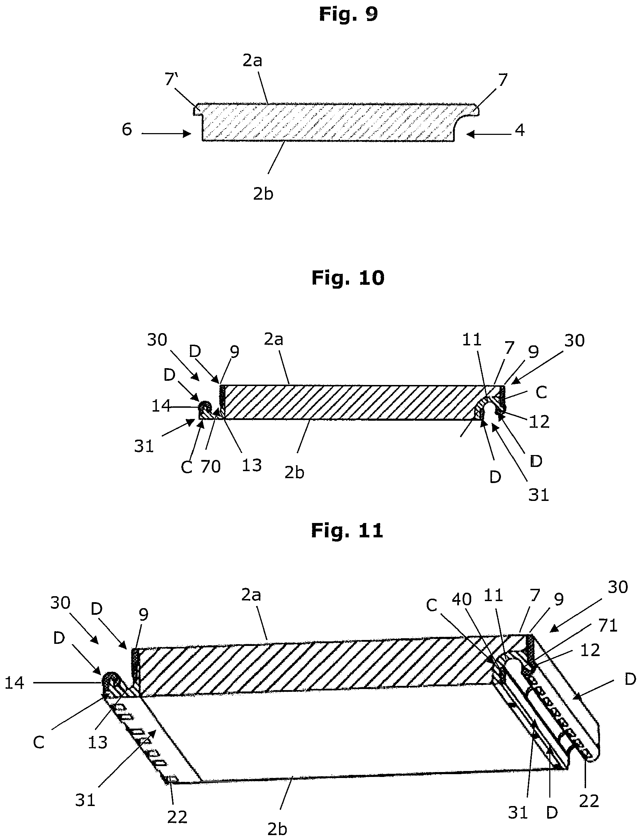

Einen Querschnitt durch eine Verlegeplatte zeigt Figur 9. Rechts in der Figur zu erkennen ist die Anordnung des ersten Absatzes 7 der sich an der kurzen Seitenfläche 4 erstreckt. Auf der linken Seite erstreckt sich an der kurzen Seitenfläche 6 der zweite, kürzere Absatz 7'. Vorliegend kann - hier nicht dargestellt - die erste Verbindungsgeometrie A an der Unterseite der ersten Absätze 7 und 8 (8 ist hier aus Gründen der Übersichtlichkeit nicht dargestellt) angeordnet sein und die zweite Verbindungsgeometrie B an der Unterseite der zweiten Absätze 7 und 8' (8' nicht dargestellt) angeordnet sein. Die Anordnung erfolgt analog zu Figur 4. Es wird bezüglich der Ausgestaltung der Verbindungsgeometrien auf Figur 4 verwiesen. Im Unterschied zu Figur 4 ist allerdings keine Dichtlippe vorgesehen. Anstelle der Dichtlippe ist in dieser Ausführungsform der zweite, kurze Absatz 7' (bzw. 8') angeordnet, der ein lückenloses aneinanderlegen einzelner Verlegplatten ermöglicht.

Dabei sind die Abmessungen der Verbindungsgeometrien A, B und der ersten und zweiten Absätze 7, 7' (bzw. 8,8') so gewählt, dass bei einem Verbinden zweier Verlegeplatten der obere Bereich der Grundplatte (die Seitenflächen der ersten und zweiten Absätze) sich gegenüberliegt ohne dass sich zwischen diesen Seitenflächen des oberen Bereichs wesentliche Hohlräume ausbilden. Insbesondere lassen sich die Verlegeplatten lückenlos aneinanderlegen. Die vorliegende Ausführungsform eignet sich insbesondere für Trockenparkett.

Einen Querschnitt durch eine Verlegeplatte zeigt Figur 10. Die abgebildete Verlegeplatte weist einen vergleichbaren Aufbau auf, wie in der Figur 4 (bzw. in den Figuren 5 und 6 im Hinblick auf die Verbindungsgeometrien A, B) erläutert. Es wird bezüglich der Ausgestaltung und den Erläuterungen auf die Figuren 4, 5 und 6 verwiesen.

Der wesentliche Unterschied zu den oben genannten Figuren ist die Ausbildung eines Verbindungselements 30 welches eine Dichtlippe 9 und einen Verbindungsabschnitt 31 aufweist, an welchem die Verbindungsgeometrien A und B angeordnet sind. Die Verbindungsgeometrien sind analog zu den obigen Figuren ausgebildet. Insbesondere weisen die Verbindungsgeometrien einen Wulst 12 bzw. 14 und eine korrespondierende Nut 11 bzw. 13 auf.

Allerdings ist das Verbindungselement 30 aus zwei Komponenten ausgebildet. Es weist eine weiche Kunststoffkomponente D (insbesondere ein thermoplastisches Elastomer, wie beispielsweise TPEV) und eine harte Kunststoffkomponente C (wie beispielsweise PP) auf. Dabei weist der Verbindungsabschnitt 31 des Verbindungselements 30, der die entsprechenden mit den entsprechenden Verbindungsgeometrien A und B umfasst, ein Stützgerüst 70 (aus der harten Komponenten D) auf. Die Verbindungsgeometrien (insbesondere der Wulst 12 bzw. 14 und die korrespondierende Nut 11 bzw. 13) werden dabei durch das Stützgerüst 70 (aus der harten Komponente C) und durch die Umfassung des Stützgerüsts 70 (durch die weiche Komponente D) ausgebildet. Der Wulst 12 bzw. 14 umfasst dabei an seiner Außenfläche die weiche Komponente D und als Kern 71 einen Teilabschnitt des Stützgerüsts 70. Die Nut 11 bzw. 13 wird dabei im Wesentlichen durch das Stützgerüst aus der harten Komponente C ausgebildet. Weiterhin sind unterhalb bzw. oberhalb der Hinterschneidung Dichtstreifen 40 aus einem weichen Kunststoff angeordnet. Dabei sind ein Teilabschnitt des Verbindungsabschnitts (der Wulst 12), der Dichtstreifen 40 oberhalb der Nut 13 und die Dichtlippe 9 einstückig aus dem weichen Kunststoff D ausgebildet.

Weiterhin sind die Abschnitte des Verbindungsabschnitts und der Verbindungsgeometrien, die aus einem weichen Kunststoffmaterial D ausgebildet sind, derart an der Außenfläche des Stützgerüsts 70 angeordnet, dass bei einem Verbinden zweier Verlegeplatten die Verbindungsgeometrien (insbesondere der Wulst 12 bzw. 14 und die korrespondierende Nut 11 bzw. 13 und die Dichtstreifen 40) so ineinandergreifen, dass die Abschnitte, die durch den weichen Kunststoff D ausgebildet werden, sich im verbundenen Zustand kontaktieren. Somit sind im verbundenen Zustand die Außenflächen des Stützgerüsts 70 und somit die Außenflächen des Seitenflächen 4, 5, 6, 7 durch die Verbindungsgeometrien A, B (und dem Dichtstreifen 40) und die Dichtlippe 9 vollständig von dem ersten, weichen Kunststoff D umgeben.

Figur 11 zeigt eine Schrägansicht des Querschnitts der Figur 10. Es wird bezüglich der Ausgestaltung und den Erläuterungen auf die Figur 10 verwiesen. In Figur 11 sind vorliegend Abfolgen von Einschnitten 22 in den Wülsten 12 und 14 ersichtlich. Die Einschnitte 22 in den Wülsten 12 und 14 der ersten und zweiten Verbindungsgeometrie A und B ermöglichen ein leichteres Fügen in ihre jeweilige korrespondierende Verbindungsgeometrie. Beim Durchgang durch die schmalste Stelle der jeweils korrespondierenden Verbindungsgeometrie reduziert sich durch den Einschnitt 22 der Durchmesser der Wulst 12 bzw. 14 und wird komprimiert. An der tiefsten Stelle entlastet sich der Wulst 12 bzw. 14 wieder und schnappt in seine korrespondierende Geometrie der Nut 11 bzw. 13 ein.

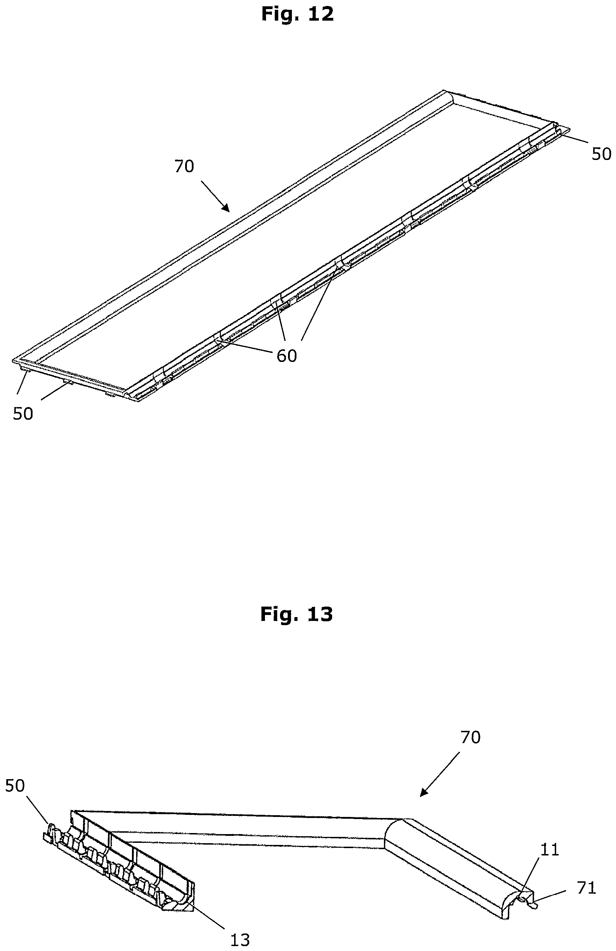

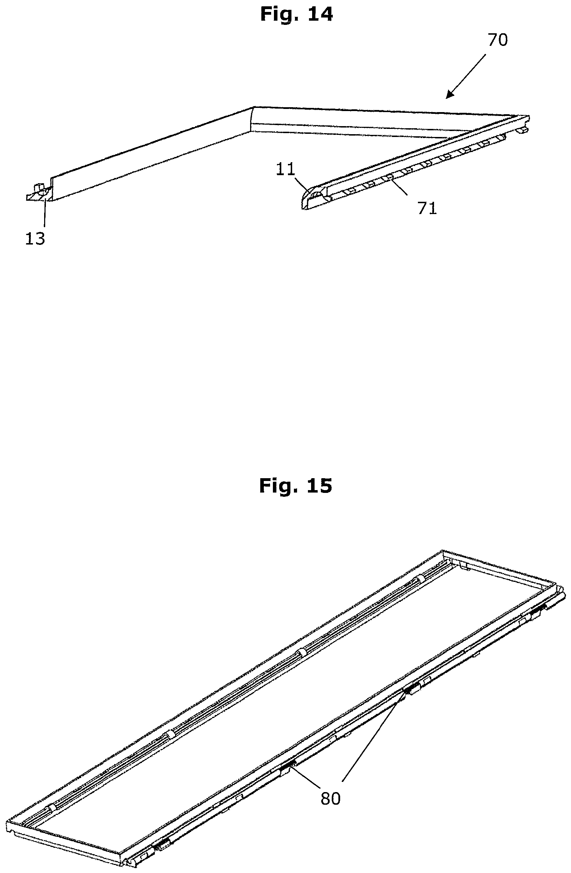

Figur 12 zeigt eine Schrägansicht des Teilbereichs (vorliegend das Stützgerüst 70) des Verbindungselements 30, der aus dem harten Kunststoff C (wie z.B. PP) gebildet wird. Also den harten Teil des Mehrkomponentensystems. Weiterhin zeigt Figur 13 und 14 denselben Teilbereich in einem 3D-Querschnitt aus verschiedenen Perspektiven.

Es wird bezüglich der Ausgestaltung und den Erläuterungen auf die Figur 10 und 11 verwiesen, da dieser Teilabschnitt im Wesentlichen dem Stützgerüst 70 aus der harten Komponente C der Figur 10 und 11 entspricht. Vorliegend sind lediglich Einzelelemente dargestellt, die in dem Querschnitt der obigen Figuren nicht bzw. schlecht ersichtlich waren.

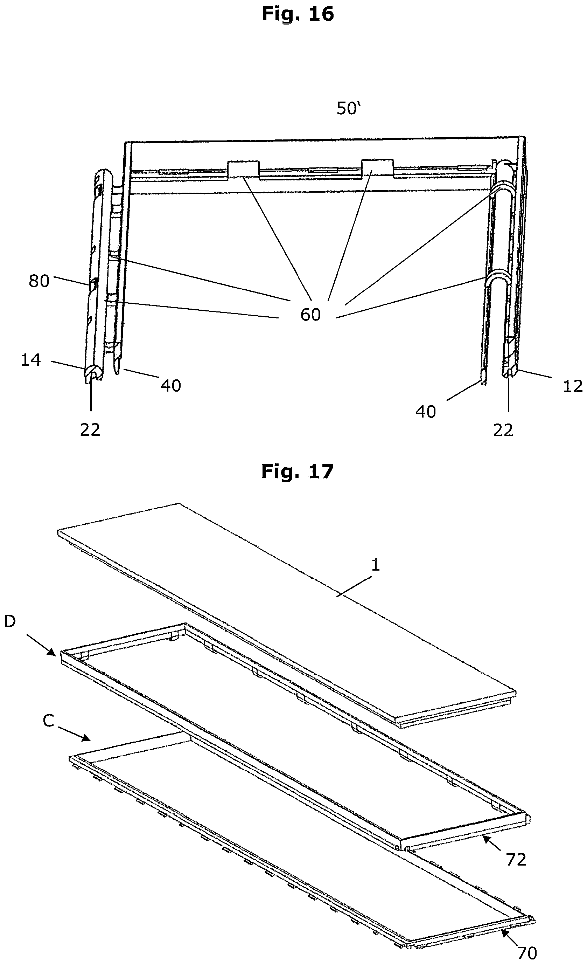

Das Stützgerüst 70 weist hierbei Aussteifungselemente 50 (wie beispielsweise Nasen an der kurzen Kante und Stege an der langen Kante auf), die in entsprechende Öffnungen in den Teilbereich des Verbindungselements, das aus einem weichen Kunststoff ausgebildet ist (siehe Figuren 15 und 16, eingebracht werden können. Die rechte Seite (männliche Seite) zeigt hierbei das Grundgerüst der ersten Verbindungsgeometrie (insbesondere die Nut 11 und den Kern 71 des Wulstes 12) und die linke Seite (weibliche Seite) zeigt hierbei das Grundgerüst der zweiten Verbindungsgeometrie (insbesondere die Nut 13).

Dabei sind die Nasen 50 (kurze Kante) zur Aussteifung der Verbindungsgeometrie der männlichen Seite und die Stege 50 (lange Kante) zur Aussteifung der Verbindungsgeometrie der weiblichen Seite vorgesehen.

Die Stege 50 der weiblichen Seite werden komplett mit der weichen Komponenten, wie z.B. TPEV (siehe elastisches Gerüst 72 der Figuren 14 und 15) überzogen, wobei das TPEV eine Omegaform hat, welches im Inneren abschnittsweise Einschnitte 22? aufweist. Diese Einschnitte befinden sich jeweils zwischen den Stegen. Die Formstabilen Stege halten die Weichkomponente in Position und erhöhen somit die Passgenauigkeit und Form-/Kraftschluss. Die Nasen 50 der männlichen Seite erfüllen denselben Zweck wie die Stege 50 der weiblichen Seite. Sie werden ebenso mit TPEV überzogen und bilden in ihrer Gesamtheit die Verbindungsgeometrie der männlichen Seite. Zwischen den jeweiligen Nasen ist später die TPEV- Geometrie eingeschnitten (siehe auch Figuren 15 und 16).

Weiterhin sind Strömungskanäle 60 für die weiche Komponente D, wie z.B. TPEV, angebracht. Über die Strömungskanäle 60 für das TPEV wird bereitgestellt, dass die heiße Kunststoffschmelze zügig und gleichmäßig verteilt wird, solange wie sie noch fließfähig ist. Über diese ist das gesamte TPEV-System miteinander verbunden (sie auch Erläuterungen zum elastischen Gerüst 72 der Figuren 15 und 16).

Figur 15 zeigt eine Schrägansicht für den Teilbereich (elastische Gerüst 72) des Verbindungselements 30, der aus dem weichen Kunststoff D (wie z.B. TPEV) gebildet wird. Also den weichen, elastischen Teil des Mehrkomponentensystems. In Figur 16 ist ein Querschnitt der Figur 15 dargestellt. Dabei wird die weiche Komponente D, wie z.B. TPEV, über die Anspritzpunkte 80 eingebracht und das elastische Gerüst ausgebildet wobei die weiche Komponente D über die Strömungskanäle 60 weiter unter anderem bis zur Dichtlippe verteilt werden kann.

Das gebildet elastische Gerüst 72 weist einen Abschnitt der Verbindungsgeometrien in Omegaform auf, welches im Inneren abschnittsweise Einschnitte 22 aufweist. Diese Einschnitte 22 befinden sich jeweils zwischen den Stegen 50 des Stützgerüsts (sieh Erläuterungen zu Figuren 12 bis 14). Die formstabilen Stege 50 halten die Weichkomponente elastische Gerüst 72 in Position und erhöhen somit die Passgenauigkeit und Form-/Kraftschluss.

Es wird bezüglich der Ausgestaltung und den Erläuterungen der weiteren Elemente auf die Figur 10 und 11 verwiesen, da dieser Teilabschnitt im Wesentlichen dem Bereich aus der weichen Komponente D der Figur 10 und 11 entspricht.

Figur 17 zeigt eine Explosionsansicht der Verlegeplatte aus einem Mehrkomponentensystem mit einer Grundplatte 1, einem elastischen Gerüsts 72 aus weichem Kunststoff D und einem Stützgerüsts 70 aus hartem Kunststoff C. Bezüglich der Ausgestaltung und den Erläuterungen wird auf die vorangegangen Figuren verweisen, die diese Grundkomponenten beschreiben.

### Bezugszeichenliste

- 1: Grundplatte
- 2a: Oberseite
- 2b: Unterseite
- 3: lange Seitenfläche
- 4: kurze Seitenfläche
- 5: lange Seitenfläche
- 6: kurze Seitenfläche
- 7: (erster) Absatz (kurze Seitenfläche)
- 8: (erster) Absatz (lange Seitenfläche)
- 7': zweiter Absatz (kurze Seitenfläche)
- 8': zweiter Absatz (lange Seitenfläche)
- 9: Dichtlippe
- 10: fertige Verlegeplatte

- A: erste Verbindungsgeometrie
- B: zweite Verbindungsgeometrie

- 11: Nut der ersten Verbindungsgeometrie
- 12: Wulst der ersten Verbindungsgeometrie
- 15: Öffnung der Nut 11
- 16: Hinterschneidung der Nut 11
- 17: freies Ende von Wulst 12
- 18: Innenkrümmung von Wulst 12

- 13: nach oben geöffnete Nut
- 14: Wulst von Nut 13
- 19: Hinterschneidung der Nut 13

- 20: Scheitel von Wulst 14
- 21: Auflagefläche von Wulst 14
- 22: Einschnitt in Wulst
- 23: rillenförmiger Einschnitt in Grundplatte
- 24: wulstfreier Abschnitt in Eckbereich
- 25: Eckbereich von Seitenflächen mit verschiedenen Verbindungsgeometrien
- 26: freier Abschnitt in Eckbereich 25
- 30: Verbindungselement
- 31: Verbindungsabschnitt
- 40: Dichtstreifen
- 50: Aussteifungselemente
- 60: Strömungskanäle
- 70: Stützgerüst
- 71: Kern aus einer harten Komponente
- 72: elastisches Gerüst
- 80: Anspritzpunkte

## Patentansprüche

1. Verlegeplatte (10) die eine Oberseite (2a), eine Unterseite (2b) und mindestens vier Seitenflächen (3, 4, 5, 6) aufweist, wobei jeweils zwei gegenüberliegende Seitenflächen (3, 4, 5, 6) zueinander korrespondierende Verbindungsgeometrien (A, B) aus Kunststoff aufweisen, und wobei die Verlegeplatte (10) aus einer Grundplatte (1) besteht, wobei die erste Verbindungsgeometrie (A) entlang zwei aneinanderstoßenden Seitenflächen (3, 4) angeordnet ist und eine nach unten geöffnete Nut (11) aufweist, die von einem Wulst (12) nach außen begrenzt wird, und die Nut (11) entlang ihrer Wandung eine Hinterschneidung (16) aufweist, und die zweite Verbindungsgeometrie (B) entlang der gegenüberliegenden Seitenflächen (5, 6) angeordnet ist, und eine nach oben offene Nut (13) aufweist, die nach außen durch einen Wulst (14) begrenzt ist, und die Nut (13) entlang ihrer Wandung eine Hinterschneidung (19) aufweist, wobei Form und Abmessung der ersten Verbindungsgeo-metrie (A) komplementär zur Form und Abmessung der zweiten Verbindungsgeometrie (B) sind, wobei der Wulst (12) der ersten Verbindungsgeometrie (A) und der Wulst (14) der zweiten Verbindungsgeometrie (B) jeweils zumindest abschnittsweise wenigstens einen Einschnitt (22) aufweisen, wobei zwei aneinanderstoßende Seitenflächen (3, 4) der Grundplatte (1) an der Oberseite (2a) einen vorspringenden Absatz (7, 8) aufweisen, **dadurch gekennzeichnet, dass** die zwei gegenüberliegenden Seitenflächen (5, 6) planar sind, wobei eine erste Verbindungsgeometrie (A) an der Unterseite der Absätze (7, 8) angeordnet ist, und die zweite Verbindungsgeometrie (B) entlang des unteren Randes der planaren Seitenflächen (5, 6) angeordnet ist, wobei entlang der Seitenflächen (3, 4, 5, 6) sowie entlang des oberen Randbereichs der planaren beiden anderen Seitenflächen eine Dichtlippe (9) mit den Verbindungsgeometrien (A, B) aus Kunststoff angebracht ist und wobei die Abmessungen der Verbindungsgeometrien und der ersten Absätze so gewählt sind, dass bei einem Verbinden zweier Verlegeplatten die Dichtlippen der jeweiligen Verlegeplatten gegenüberliegen, ohne dass sich zwischen diesen Seitenflächen des oberen Bereichs wesentliche Hohlräume ausbilden.

2. Verlegeplatte nach Anspruch 1, **dadurch gekennzeichnet, dass** der Wulst (12) der ersten Verbindungsgeometrie (A) und der Wulst (14) der zweiten Verbindungsgeometrie (B) jeweils eine Abfolge von Einschnitten (22) aufweist, die mittels eines Steges voneinander abgetrennt sind, wobei insbesondere der Steg eine Dicke, gemessen entlang der Längserstreckungsrichtung des Wulstes (12) oder des Wulstes (14), von 2 mm bis 50 mm, aufweist.

3. Verlegeplatte nach einem der vorherigen Ansprüche, **dadurch gekennzeichnet, dass** die Dichtlippe (9) und die Verbindungsgeometrien (A, B) einstückig aus Kunststoff ausgebildet sind, der eine Shore-Härte A von mindestens 85 aufweist.

4. Verlegeplatte nach einem der vorhergehenden Ansprüche, **dadurch gekennzeichnet, dass** die Dichtlippe (9) und die Verbindungsgeometrien (A, B) aus unterschiedlichen Kunststoffmaterialien gebildet sind, wobei insbesondere die Dichtlippe (9) aus einem weichen Kunststoff gebildet ist, und die Verbindungsgeometrien (A, B) aus einem harten Kunststoff gebildet ist.

5. Verlegeplatte nach Anspruch 1, **dadurch gekennzeichnet, dass** entlang der Seitenflächen (3, 4, 5, 6) ein Verbindungselement (30) angeordnet ist, welches die Dichtlippe (9) und einen Verbindungsabschnitt (31) mit den Verbindungsgeometrien (A, B) aufweist, wobei das Verbindungselement (30) aus einem Mehrkomponentenmaterial ausgebildet ist, welches wenigstens zwei Kunststoffe umfasst, wobei wenigstens ein erster Kunststoff ein weicher Kunststoff ist und wenigstens ein zweiter Kunststoff ein harter Kunststoff ist.

6. Verlegeplatte nach Anspruch 5, **dadurch gekennzeichnet, dass** die Dichtlippe (9) des Verbindungselements (30) aus einem ersten, weichen Kunststoff ausgebildet ist, wobei der Verbindungsabschnitt (31) und die Verbindungsgeometrien (A, B) des Verbindungselements (30) aus wenigstens einem zweiten, harten Kunststoff ausgebildet sind.

7. Verlegeplatte nach einem der Ansprüche 5 oder 6, **dadurch gekennzeichnet, dass** die Dichtlippe (9) des Verbindungselements (30) aus einem ersten, weichen Kunststoff ausgebildet ist, wobei der Verbindungsabschnitt (31) und die Verbindungsgeometrien (A, B) des Verbindungselements (30) aus wenigstens einem zweiten, harten Kunststoff und wenigstens einem weiteren oder demselben, weichen Kunststoff ausgebildet sind.

8. Verlegeplatte nach einem der Ansprüche 5 bis 7, **dadurch gekennzeichnet, dass** die Dichtlippe (9) des Verbindungselements (30) aus einem ersten, weichen Kunststoff ausgebildet ist, wobei der Verbindungsabschnitt (31) ein Stützgerüst (70) aus einem zweiten, harten Kunststoff aufweist, und wobei das Stützgerüst (70) von wenigstens einem weiteren oder demselben, weichen Kunststoff abschnittsweise an seiner Außenfläche umgeben ist.

9. Verlegeplatte nach einem der Ansprüche 5 bis 8, **dadurch gekennzeichnet, dass** der wenigstens eine weiche Kunststoff eine Shore-Härte A von 10 bis 95, und der harte Kunststoff eine Shore-Härte D von 10 bis 95 aufweist.

10. Verlegeplatte nach einem der Ansprüche 5 bis 9, **dadurch gekennzeichnet, dass** der wenigstens eine weiche Kunststoff ein thermoplastisches Elastomer und der wenigstens eine harte Kunststoff ein Thermoplast ist.

11. Verlegeplatte nach einem der Ansprüche 5 bis 10, **dadurch gekennzeichnet, dass** der Wulst (12) der erste Verbindungsgeometrie (A) und der Wulst (14) der zweiten Verbindungsgeometrie (B) zumindest abschnittsweise aus einem weichen Kunststoff ausgebildet, wobei die Nut (11) der erste Verbindungsgeometrie (A) und die Nut (13) der zweiten Verbindungsgeometrie (B) aus einem harten Kunststoff ausgebildet sind.

12. Verfahren zur Herstellung einer Verlegeplatte (10) nach einem der Ansprüche 1 bis 4, wobei in einem ersten Schritt die Grundplatte (1) hergestellt wird, in einem zweiten Schritt die Dichtlippe (9) mit Verbindungsgeometrien (A, B) an den Seitenflächen (3, 4, 5, 6) der Grundplatte (1) mittels Spritzgusstechnik angeformt wird, wobei die vorgeformte Grundplatte (1) in eine Kavität eines Spritzgusswerkzeuges eingelegt wird, wobei die Kavität die Strukturen für Dichtlippe und die Verbindungsgeometrien aufweist, und die Dichtlippe (9) und die Verbindungsgeometrien an die vorgeformte Grundplatte (1) angespritzt werden, und gegebenenfalls in einem dritten Schritt die Oberseite (2a) der Grundplatte (1) hydrophobiert wird.

13. Verwendung einer Verlegeplatte (10) nach einem der Ansprüche 1 bis 11, für die Ausbildung von Fußböden, Wandbelegen oder Deckenbelegen in feuchter oder nasser Umgebung.

## Claims

1. Floor board (10) having an upper side (2a), an underside (2b) and at least four side surfaces (3, 4, 5, 6), wherein at least two opposite surfaces (3, 4, 5, 6) each have mutually corresponding connection geometries (A, B) made of plastic, and wherein the floor board (10) consists of a base plate (1), wherein the first connection geometry (A) is arranged along two abutting side surfaces (3, 4) and has a downwardly opening groove (11), which is limited to the outside by a bead (12) and the groove (11) has an undercut (16) along its wall and the second connection geometry (B) is arranged along the opposite side surfaces (5, 6) and has an upwardly opening groove (13), which is limited to the outside by a bead (14) and the groove (13) has an undercut (19) along its wall, wherein shape and dimension of the first connection geometry (A) are complementary to the shape and dimension of the second connection geometry (B), wherein the bead (12) of the first connection geometry (A) and the bead (14) of the second connection geometry (B) each have, at least in sections, at least one indentation (22), wherein two abutting side surfaces (3, 4) of the base plate (1) have a projecting shoulder (7, 8) on the upper side (2a), **characterised in that** the two opposite side surfaces (5, 6) are planar, wherein a first connection geometry (A) is arranged on the underside of the shoulders (7, 8) and the second connection geometry (B) is arranged along the lower edge of the planar side surfaces (5, 6), wherein along the side surfaces (3, 4, 5, 6) as well as along the upper edge region of the two other planar side surfaces, a sealing lip (9) is mounted with the connection geometries (A, B) made of plastic and wherein the dimensions of the connection geometries and the first shoulders are selected in such a manner that when two floor boards are connected, the sealing lips of the respective floor boards face each other without substantial cavities being formed between said side surfaces of the upper region.

2. Floor board according to claim 1, **characterised in that** the bead (12) of the first connection geometry (A) and the bead (14) of the second connection geometry (B) each have a sequence of indentations (22), which are separated from each other by means of a web, wherein particularly the web has a thickness, measured along the longitudinal direction of the bead (12) or the bead (14), of 2 mm to 50 mm.

3. Floor board according to one of the previous claims, **characterised in that** the sealing lip (9) and the connection geometries (A, B) are formed in one piece from plastic having a Shore hardness A of at least 85.

4. Floor board according to one of the previous claims, **characterised in that** the sealing lip (9) and the connection geometries (A, B) are made of different plastic materials, wherein in particular the sealing lip (9) is made of a soft plastic material and the connection geometries (A, B) of a hard plastic material.

5. Floor board according to claim 1, **characterised in that** along the side surfaces (3, 4, 5, 6) a connection element (30) is arranged, which features the sealing lip (9) and a connection portion (31) with the connection geometries (A, B), wherein the connection element (30) is made of a multi-component material, which comprises at least two plastics, wherein at least one first plastic is a soft plastic and at least one second plastic is a hard plastic.

6. Floor board according to claim 5, **characterised in that** the sealing lip (9) of the connection element (30) is made of a first, soft plastic, wherein the connection portion (31) and the connection geometries (A, B) of the connection element (30) are made of at least one second, hard plastic.

7. Floor board according to one of claims 5 or 6, **characterised in that** the sealing lip (9) of the connection element (30) is made of a first, soft plastic, wherein the connection portion (31) and the connection geometries (A, B) of the connection element (30) are made of at least one second, hard plastic and at least one further or the same, soft plastic.

8. Floor board according to one of claims 5 to 7, **characterised in that** the sealing lip (9) of the connection element (30) is formed of a first, soft plastic, wherein the connection portion (31) has a support structure (70) made of a second, hard plastic and wherein the support structure (70) is surrounded in sections at its outer surface by at least one further or the same, soft plastic.

9. Floor board according to one of claims 5 to 8, **characterised in that** the at least one soft plastic has a Shore hardness A of 10 to 95 and the hard plastic has a Shore hardness D of 10 to 95.

10. Floor board according to one of claims 5 to 9, **characterised in that** the at least one soft plastic is a thermoplastic elastomer and the at least one hard plastic is a thermoplastic.

11. Floor board according to one of claims 5 to 10, **characterised in that** the bead (12) of the first connection geometry (A) and the bead (14) of the second connection geometry (B) is at least partially formed by a soft plastic, wherein the groove (11) of the first connection geometry (A) and the groove (13) of the second connection geometry (B) is formed of a hard plastic.

12. Method for producing a floor board (10) according to one of claims 1 to 4, wherein in a first step, the base plate (1) is produced, in a second step, the sealing lip (9) with the connection geometries (A, B) is moulded on the side surfaces (3, 4, 5, 6) of the base plate (1) by means of injection moulding, wherein the preformed base plate (1) is inserted in a cavity of an injection moulding tool, wherein the cavity has the structures for the sealing lip and the connection geometries, and the sealing lip (9) and the connection geometries are injection-moulded onto the preformed base plate (1) and, if necessary, in a third step, the upper side (2a) of the base plate (1) is hydrophobised.

13. Use of a floor board (10) according to one of claims 1 to 11 for the formation of flooring, wall coverings or ceiling coverings in a humid or wet environment.

## Revendications

1. Plaque (10) de plancher à poser, présentant un dessus (2a), un dessous (2b) et au moins quatre surfaces latérales (3, 4, 5, 6), sachant que respectivement deux surfaces latérales (3,4, 5, 6) se faisant face présentent des géométries de liaison (A, B) en plastique s'épousant mutuellement, et sachant que la plaque (10) de plancher à poser se compose d'une plaque de base (1), sachant que la première géométrie de liaison (A) est disposée le long de deux surfaces latérales (3, 4) arrivant bord contre bord et qu'elle présente une gorge (11) ouverte vers le bas délimitée vers l'extérieur par un bourrelet (12), et que la gorge (11) présente une contre-dépouille (16) le long de sa paroi, et sachant que la seconde géométrie de liaison (B) est disposée le long des surfaces latérales (5, 6) se faisant face, et qu'elle présente une gorge (13) ouverte vers le haut, gorge qui est délimitée vers l'extérieur par un bourrelet (14), et que la gorge (13) présente une contre-dépouille (19) le long de sa paroi, sachant que la forme et la dimension de la première géométrie de liaison (A) épousent la forme et la dimension de la seconde géométrie de liaison (B), sachant que le bourrelet (12) de la première géométrie de liaison (A) et le bourrelet (14) de la seconde géométrie de liaison (B) présentent respectivement au moins une incision (22) au moins de manière segmentée, sachant que deux surfaces latérales (3, 4) arrivant bord à bord de la plaque de base (1) présentent un épaulement en saillie (7, 8) sur le dessus (2a), **caractérisée en ce que** les deux surfaces latérales (5, 6) se faisant face sont planes, sachant qu'une première géométrie de liaison (A) est disposée contre le dessous des épaulements (7, 8), et que la seconde géométrie de liaison (B) est disposée le long du bord inférieur des surfaces latérales (5, 6) planes, sachant que le long des surfaces latérales (3, 4, 5, 6) ainsi que le long de la zone marginale supérieure des deux autres surfaces latérales planes est fixée un lèvre d'étanchéité (9) en plastique présentant les géométries de liaison (A, B) et sachant que les dimensions des géométries de liaison et des premiers épaulements ont été choisies de telle manière que lors de la jonction de deux plaques de plancher à poser les lèvres d'étanchéité des plaques de plancher à poser respectives se font face sans que n'apparaissent de cavités importantes entre ces surfaces latérales de la zone supérieure.

2. Plaque de plancher à poser selon la revendication 1, **caractérisée en ce que** le bourrelet (12) de la première géométrie de liaison (A) et le bourrelet (14) de la seconde géométrie de liaison (B) présentent respectivement une succession d'incisions (22) séparées les unes des autres au moyen d'une nervure, sachant que notamment la nervure présente une épaisseur de 2 mm à 50 mm mesurée le long de la direction d'extension longitudinale du bourrelet (12) ou du bourrelet (14).

3. Plaque de plancher à poser selon l'une des revendications précédentes, **caractérisée en ce que** la lèvre d'étanchéité (9) et les géométries de liaison (A, B) sont formées en plastique monobloc présentant une dureté Shore A d'au moins 85.

4. Plaque de plancher à poser selon l'une des revendications précédentes, **caractérisée en ce que** la lèvre d'étanchéité (9) et les géométries de liaison (A, B) sont formées de différentes matières plastiques, sachant que notamment la lèvre d'étanchéité (9) est formée d'une matière plastique molle et que les géométries de liaison (A, B) sont formées d'une matière plastique dure.

5. Plaque de plancher à poser selon la revendication 1, **caractérisée en ce que** le long des surfaces latérales (3, 4, 5, 6) est disposé un élément de liaison (30) présentant la lèvre d'étanchéité (9) et un segment de liaison (31) avec les géométries de liaison (A, B), sachant que l'élément de liaison (30) est formé d'un matériau multicomposants comprenant au moins deux matières plastiques, sachant qu'au moins une première matière plastique est une matière plastique molle et qu'au moins une seconde matière plastique est une matière plastique dure.

6. Plaque de plancher à poser selon la revendication 5, **caractérisée en ce que** la lèvre d'étanchéité (9) de l'élément de liaison (30) est formée à partir d'une première matière plastique molle, sachant que le segment de liaison (31) et les géométries de liaison (A, B) de l'élément de liaison (30) sont formés à partir d'au moins une seconde matière plastique dure.

7. Plaque de plancher à poser selon l'une des revendications 5 ou 6, **caractérisée en ce que** la lèvre d'étanchéité (9) de l'élément de liaison (30) est formée à partir d'une première matière plastique molle, sachant que le segment de liaison (31) et les géométries de liaison (A, B) de l'élément de liaison (30) sont formés à partir d'au moins une seconde matière plastique dure et d'au moins une autre matière plastique ou de la même matière plastique molle.

8. Plaque de plancher à poser selon l'une des revendications 5 à 7, **caractérisée en ce que** la lèvre d'étanchéité (9) de l'élément de liaison (30) est formée à partir d'une première matière plastique molle, sachant que le segment de liaison (31) présente une structure d'appui (70) composée d'une seconde matière plastique dure, et sachant que la structure d'appui (70) est entourée, de manière segmentée contre sa surface extérieure, d'au moins une autre matière plastique ou de la même matière plastique molle.

9. Plaque de plancher à poser selon l'une des revendications 5 à 8, **caractérisée en ce qu'**au moins une matière plastique molle présente une dureté Shore A comprise entre 10 et 95 et que la matière plastique dure présente une dureté Shore D comprise entre 10 et 95.

10. Plaque de plancher à poser selon l'une des revendications 5 à 9, **caractérisée en ce qu'**au moins une matière plastique molle est un élastomère thermoplastique et qu'au moins une matière plastique dure est un thermoplastique.

11. Plaque de plancher à poser selon l'une des revendications 5 à 10, **caractérisée en ce que** le bourrelet (12) de la première géométrie de liaison (A) et le bourrelet (14) de la deuxième géométrie de liaison (B) sont formés au moins de manière segmentée à partir d'une matière plastique molle, sachant que la gorge (11) de la première géométrie de liaison (A) et la gorge (13) de la deuxième géométrie de liaison (B) sont formées à partir d'une matière plastique dure.

12. Procédé pour la fabrication d'une plaque (10) de plancher à poser selon l'une des revendications 1 à 4, sachant qu'au cours d'une première étape la plaque de base (1) est fabriquée, qu'au cours d'une deuxième étape la lèvre d'étanchéité (9) est formée, avec des géométries de liaison (A, B), contre les surfaces latérales (3, 4, 5, 6) de la plaque de base (1) au moyen d'une technique de moulage injecté, sachant que la plaque de base (1) préformée est déposée dans une cavité d'un moule de moulage par injection, sachant que la cavité présente les structures requises pour la lèvre d'étanchéité et les géométries de liaison, et que la lèvre d'étanchéité (9) et les géométries de liaison sont injectées en applique contre la plaque de base (1) préformée, et que le cas échéant, au cours d'une troisième étape, le dessus (2a) de la plaque de base (1) reçoit un traitement hydrophobe.

13. Utilisation d'une plaque (10) de plancher à poser selon l'une des revendications 1 à 11 pour former des planchers, revêtements muraux ou revêtements de plafond en milieu humide ou mouillé.
